# EUROPEAN PATENT APPLICATION

(11) **EP 4 622 223 A1**
(43) Date of publication of application: **24.09.2025**
(21) Application number: 23896898.6
(22) Date of filing: 30.11.2023
(51) Int. Cl.: H04L 67/12, H04W 24/08

(54) **VEHICLE TESTING METHOD AND RELATED APPARATUS**

(30) Priority: 02.12.2022 CN 202211538398
(71) Applicant: Shenzhen Yinwang Intelligent Technologies Co., Ltd., Shenzhen, Guangdong 518129 (CN)
(72) Inventor: DONG, Zhilei, Shenzhen, Guangdong 518129 (CN); WEI, Xiongan, Shenzhen, Guangdong 518129 (CN); ZHAN, Yongqiang, Shenzhen, Guangdong 518129 (CN)
(74) Representative: MERH-IP Matias Erny Reichl Hoffmann Patentanwälte PartG mbB
(86) International application number: PCT/CN2023/135585
(87) International publication number: WO 2024/114756

(57) **Abstract**

A vehicle test method and a related apparatus are provided, and are applied to the field of intelligent driving technologies. The method includes: A network device receives first information sent by a first terminal device, where the first information includes information about a vehicle-to-everything V2X event associated with the first terminal device; the network device receives second information sent by a first device, where the first device is a device different from the first terminal device, and the second information includes information about the first terminal device obtained by the first device; and the network device tests a V2X function of the first terminal device based on the first information and the second information. The method can improve a test capability, is applicable to a large-scale vehicle test scenario, and has diversified test scenarios.

## Description

This application claims priority to Chinese Patent Application No. 202211538398.5, filed with the China National Intellectual Property Administration on December 2, 2022 and entitled "VEHICLE TEST METHOD AND RELATED APPARATUS", which is incorporated herein by reference in its entirety.

### TECHNICAL FIELD

This application relates to the field of intelligent driving technologies, and in particular, to a vehicle test method and a related apparatus.

### BACKGROUND

With continuous development of intelligent driving technologies, intelligent vehicles are increasingly widely used in people's daily life. In an intelligent driving application scenario, an intelligent vehicle may exchange information with the outside by using a vehicle-to-everything (Vehicle to X, V2X) technology, to obtain a series of traffic information such as real-time road conditions, road information, and pedestrian information, and analyze the traffic information, to improve driving safety and traffic efficiency. Therefore, it is important to test a V2X application function of the intelligent vehicle.

However, in a current test method for the V2X application function, a test amount per unit time depends on a quantity of test devices, and a test capability is weak. Therefore, the test method is not applicable to a large-scale vehicle test scenario, and a test scenario is simple.

### SUMMARY

Embodiments of this application provide a vehicle test method and a related apparatus, to improve a test capability, enhance applicability to a large-scale vehicle test scenario, and diversify test scenarios.

According to a first aspect, an embodiment of this application provides a vehicle test method. The method includes:

A network device receives first information sent by a first terminal device, where the first information includes information about a vehicle-to-everything V2X event associated with the first terminal device.

The network device receives second information sent by a first device, where the first device is a device different from the first terminal device, and the second information includes information about the first terminal device obtained by the first device.

The network device tests a V2X function of the first terminal device based on the first information and the second information.

In this embodiment of this application, the vehicle test method is provided and applied to the field of intelligent driving technologies. The network device receives the first information sent by the first terminal device and the second information sent by the first device, and tests the V2X function of the first terminal device based on the first information and the second information. The first information includes the information about the V2X event associated with the first terminal device, and the second information includes the information about the first terminal device obtained by the first device. According to this embodiment of this application, when a V2X scenario is triggered, the first terminal device reports the first information associated with the V2X event to the network device. The network device can identify, in time, a result reported by the first terminal device, and can reversely verify correctness of the first information more accurately based on information for triggering the V2X scenario in the first information and the information about the first terminal device reported by the first device, to test the V2X function of the first terminal device. In this embodiment of this application, computing power and a storage capability of the network device are used, so that one test system can support concurrent tests in a plurality of test areas. This greatly improves a vehicle test capability, is applicable to a large-scale vehicle test scenario, and has diversified test scenarios.

In a possible implementation, the first information includes information about a vehicle-to-vehicle V2V event associated with the first terminal device and/or information about a vehicle-to-infrastructure V2I event associated with the first terminal device.

In this embodiment of this application, a possible specific implementation of the first information is provided. Specifically, the first information includes the information about the vehicle-to-vehicle (vehicle-to-vehicle, V2V) event and/or the information about the vehicle-to-infrastructure (vehicle-to-infrastructure, V2I) event associated with the first terminal device. The V2V event includes but is not limited to events such as a forward collision warning, an emergency braking warning, and a vehicle out-of-control warning. The V2I event includes but is not limited to events such as a curve speed warning, a wrong-way driving warning, and an intersection facility-assisted emergency vehicle warning. This embodiment of this application may be applied to a vehicle test in scenarios including but not limited to a V2V scenario and a V2I scenario. Test scenarios are diversified, and concurrent tests in a plurality of test areas are supported. This greatly improves a vehicle test capability, and is applicable to a large-scale vehicle test scenario.

In a possible implementation, when the first information includes the information about the vehicle-to-vehicle V2V event associated with the first terminal device, the first information further includes first motion information of a second terminal device.

That the network device tests a V2X function of the first terminal device based on the first information and the second information includes:

The network device tests a V2V function of the first terminal device based on the first information and the second information.

In this embodiment of this application, a possible specific implementation of testing the V2V function of the first terminal device is provided. Specifically, the network device tests the V2V function of the first terminal device based on the first information and the second information. The first information includes the information about the V2V event associated with the first terminal device and the first motion information of the second terminal device, and the second information includes the information about the first terminal device reported by the first device. In this embodiment of this application, the testing the V2V function of the first terminal device based on the first information and the second information may be specifically verifying authenticity of the V2V event by using the information about the first terminal device and the first motion information of the second terminal device, to test the V2V function of the first terminal device. In this embodiment of this application, the computing power and the storage capability of the network device are used, so that concurrent tests on a vehicle V2V function in a plurality of test areas can be supported. This greatly improves the vehicle test capability, and is applicable to the large-scale vehicle test scenario.

In a possible implementation, the second information includes second motion information of the first terminal device obtained by the first device, and the second motion information is motion information for triggering the V2V event.

That the network device tests a V2V function of the first terminal device based on the first information and the second information includes:

The network device verifies the V2V event based on the first motion information and the second motion information.

In this embodiment of this application, a possible specific implementation of verifying the V2V event of the first terminal device is provided. Specifically, the network device tests the V2V function of the first terminal device based on the first motion information and the second motion information. The first motion information is motion information of the second terminal device, the second motion information is motion information of the first terminal device obtained by the first device, and the second motion information is the motion information for triggering the V2V event. In this embodiment of this application, the V2V event of the first terminal device is verified based on the first motion information and the second motion information, and authenticity of the V2V event is verified, to test the V2V function of the first terminal device. In this embodiment of this application, the computing capability and the storage capability of the network device are used, so that the concurrent tests on the vehicle V2V function in the plurality of test areas can be supported. This greatly improves the vehicle test capability, and is applicable to the large-scale vehicle test scenario.

In a possible implementation, the method further includes:
determining the second motion information in the second information based on the V2V event.

In a possible implementation, the determining the second motion information in the second information based on the V2V event includes:
determining, in the second information based on a timestamp of the V2V event, motion information obtained when the V2V event occurs as the second motion information.

In a possible implementation, that the network device verifies the V2V event based on the first motion information and the second motion information includes:
determining, based on the first motion information and the second motion information, whether the V2V event occurs; and
when it is determined that the V2V event occurs, verifying that the V2V event is true; or
when it is determined that the V2V event does not occur, verifying that the V2V event is false.

In this embodiment of this application, a possible specific implementation of verifying the V2V event is provided. Specifically, whether the V2V event occurs is determined based on the first motion information and the second motion information; and if the V2V event occurs, it is verified that the V2V event is true; or if the V2V event does not occur, it is verified that the V2V event is false. According to this embodiment of this application, the computing power and the storage capability of the network device are used, so that concurrently verifying a plurality of V2V events can be supported, to implement the concurrent tests on the vehicle V2V function in the plurality of test areas. This greatly improves the vehicle test capability, and is applicable to the large-scale vehicle test scenario.

In a possible implementation, the method further includes:
verifying authenticity of the first motion information based on the V2V event and third motion information.

The third motion information is motion information that is from the first device and that is of a terminal device associated with the V2V event.

In this embodiment of this application, a possible specific implementation of verifying authenticity of the first motion information is provided. Specifically, the network device verifies authenticity of the first motion information based on the V2V event and the third motion information. The third motion information is the motion information that is from the first device and that is of the terminal device associated with the V2V event. According to this embodiment of this application, authenticity of the first motion information is verified by using the third motion information, so that authenticity of the first motion information can be improved, to improve accuracy and reliability of verifying the V2V event.

In a possible implementation, the verifying authenticity of the first motion information based on the V2V event and third motion information includes:
when the first motion information is the same as the third motion information, determining that the first motion information is true; or
when the first motion information is different from the third motion information, determining that the first motion information is false.

In this embodiment of this application, a possible specific implementation of verifying authenticity of the first motion information is provided. Specifically, if the first motion information is the same as the third motion information, it is determined that the first motion information is true; or if the first motion information is different from the third motion information, it is determined that the first motion information is false. According to this embodiment of this application, authenticity of the first motion information is verified by using the third motion information, so that authenticity of the first motion information can be improved, to improve accuracy and reliability of verifying the V2V event.

In a possible implementation, when the first information includes the information about the vehicle-to-infrastructure V2I event associated with the first terminal device, the first information further includes fourth motion information of the first terminal device and first road side information of a road on which the first terminal device is located.

That the network device tests a V2X function of the first terminal device based on the first information and the second information includes:

The network device tests a V2I function of the first terminal device based on the first information and the second information.

In this embodiment of this application, a possible specific implementation of testing the V2I function of the first terminal device is provided. Specifically, the network device tests the V2I function of the first terminal device based on the first information and the second information. The first information includes the information about the V2I event associated with the first terminal device, the fourth motion information of the first terminal device, and the first road side information of the road on which the first terminal device is located, and the second information includes the information about the first terminal device reported by the first device. According to this embodiment of this application, the testing the V2I function of the first terminal device based on the first information and the second information may be specifically verifying authenticity of the V2I event by using the information about the first terminal device reported by the first device, the fourth motion information of the first terminal device, and the first road side information of the road on which the first terminal device is located, to test the V2I function of the first terminal device. In this embodiment of this application, the computing capability and the storage capability of the network device are used, so that the concurrent tests on the vehicle V2I function in the plurality of test areas can be supported. This greatly improves the vehicle test capability, and is applicable to the large-scale vehicle test scenario.

In a possible implementation, the first road side information includes information about a first road side event, and the first road side event is a road side event associated with the V2I event; or
the first road side information includes traffic light information and map information, and the traffic light information is information associated with the V2I event.

In this embodiment of this application, a possible specific implementation of the first road side information is provided. Specifically, the first road side information includes the information about the first road side event, or includes the traffic light information and the map information. The first road side event is the road side event associated with the V2I event. For example, the V2I event is a curve speed warning, and the first road side event associated with the V2I event may be a curve ahead notification. The traffic light information is the information associated with the V2I event. For example, the V2I event is an intersection facility-assisted emergency vehicle warning, and the traffic light information associated with the V2I event may be intersection red light warning information.

In a possible implementation, the second information includes fifth motion information of the first terminal device obtained by the first device, and the fifth motion information is motion information for triggering the V2I event.

That the network device tests a V2I function of the first terminal device based on the first information and the second information includes:

The network device verifies the V2I event based on the fourth motion information, the fifth motion information, the first road side information, and second road side information, where the second road side information is road side information for triggering the V2I event.

In this embodiment of this application, a possible specific implementation of verifying the V2I event of the first terminal device is provided. Specifically, the network device tests the V2I function of the first terminal device based on the fourth motion information, the fifth motion information, the first road side information, and the second road side information. The fourth motion information is motion information reported by the first terminal device, the fifth motion information is motion information of the first terminal device obtained by the first device, and the fifth motion information is the motion information for triggering the V2I event. The first road side information is road side information reported by the first terminal device, and the second road side information is the road side information for triggering the V2I event. In this embodiment of this application, the V2I event of the first terminal device is verified based on the fourth motion information, the fifth motion information, the first road side information, and the second road side information, to verify authenticity of the V2I event, to test the V2I function of the first terminal device. In this embodiment of this application, the computing capability and the storage capability of the network device are used, so that the concurrent tests on the vehicle V2I function in the plurality of test areas can be supported. This greatly improves the vehicle test capability, and is applicable to the large-scale vehicle test scenario.

In a possible implementation, the method further includes:
determining the fifth motion information in the second information based on the V2I event.

In a possible implementation, the determining the fifth motion information in the second information based on the V2I event includes:
determining, in the second information based on a timestamp of the V2I event, motion information obtained when the V2I event occurs as the fifth motion information.

In a possible implementation, the second information further includes at least one of traffic flow information, the traffic light information, and the map information, and the method further includes:

The network device sends the first road side information to the first terminal device, where the first road side information includes at least one of the information about the first road side event, the traffic light information, and the map information.

In this embodiment of this application, a possible specific implementation of sending the first road side information is provided. Specifically, the network device sends the first road side information to the first terminal device, where the first road side information includes at least one of the information about the first road side event, the traffic light information, and the map information. In one aspect, the second information received by the network device may include the traffic flow information, and the traffic flow information is obtained after the first device performs calculation processing on data collected by a sensor like a camera or a radar. The network device identifies the first road side event based on the traffic flow information, and sends the information about the first road side event to the first terminal device as the first road side information. In another aspect, the second information received by the network device may further include the traffic light information, and the traffic light information is information reported by the first device. The network device identifies that the traffic light information is information associated with the V2I event, and sends both the traffic light information and the map information to the first terminal device as the first road side information. According to this embodiment of this application, possible V2I function test scenarios such as a road side event-triggered V2I event and a traffic light information-triggered V2I event are separately provided, so that one test system can support concurrent tests in a plurality of test areas. This greatly improves the vehicle test capability.

In a possible implementation, that the network device verifies the V2I event based on the fourth motion information, the fifth motion information, the first road side information, and second road side information includes:
determining, based on the fourth motion information, the fifth motion information, the first road side information, and the second road side information, whether the V2I event occurs; and
when it is determined that the V2I event occurs, verifying that the V2I event is true; or
when it is determined that the V2I event does not occur, verifying that the V2I event is false.

In this embodiment of this application, a possible specific implementation of verifying the V2I event is provided. Specifically, whether the V2I event occurs is determined based on the fourth motion information, the fifth motion information, the first road side information, and the second road side information; and if the V2I event occurs, it is verified that the V2I event is true; or if the V2I event does not occur, it is verified that the V2I event is false. According to this embodiment of this application, the computing capability and the storage capability of the network device are used, so that concurrently verifying a plurality of V2I events can be supported, to implement the concurrent tests on the vehicle V2I function in the plurality of test areas. This greatly improves the vehicle test capability, and is applicable to the large-scale vehicle test scenario.

In a possible implementation, the method further includes:
verifying authenticity of the fourth motion information and the first road side information based on the V2I event, sixth motion information, and third road side information.

The sixth motion information is motion information that is from the first device and that is of a terminal device associated with the V2I event, and the third road side information is road side information that is from the first device and that is of the terminal device associated with the V2I event.

In this embodiment of this application, a possible specific implementation of verifying authenticity of the fourth motion information and the first road side information is provided. Specifically, the network device verifies authenticity of the fourth motion information and the first road side information based on the V2I event, the sixth motion information, and the third road side information. The sixth motion information is the motion information that is from the first device and that is of the terminal device associated with the V2I event, and the third road side information is motion information that is from the first device and that is of the terminal device associated with the V2I event. According to this embodiment of this application, authenticity of the fourth motion information is verified by using the sixth motion information, and authenticity of the first road side information is verified by using the third road side information, so that authenticity of the fourth motion information and the first road side information can be improved, to improve accuracy and reliability of verifying the V2I event.

In a possible implementation, the verifying authenticity of the fourth motion information and the first road side information based on the V2I event, sixth motion information, and third road side information includes:
when the fourth motion information is the same as the sixth motion information, determining that the fourth motion information is true; and
when the first road side information is the same as the third road side information, determining that the first road side information is true; or
when the fourth motion information is different from the sixth motion information, determining that the fourth motion information is false; and
when the first road side information is different from the third road side information, determining that the first road side information is false.

In this embodiment of this application, a possible specific implementation of verifying authenticity of the fourth motion information and the first road side information is provided. Specifically, if the fourth motion information is the same as the sixth motion information, it is determined that the fourth motion information is true; or if the fourth motion information is different from the sixth motion information, it is determined that the fourth motion information is false. If the first road side information is the same as the third road side information, it is determined that the first road side information is true; or if the first road side information is different from the third road side information, it is determined that the first road side information is false. According to this embodiment of this application, authenticity of the fourth motion information is verified by using the sixth motion information, and authenticity of the first road side information is verified by using the third road side information, so that authenticity of the fourth motion information and the first road side information can be improved, to improve accuracy and reliability of verifying the V2I event.

According to a second aspect, an embodiment of this application provides a vehicle test method. The method includes:

A first terminal device sends first information to a network device, where the first information includes information about a vehicle-to-everything V2X event associated with the first terminal device.

The first terminal device sends information about the first terminal device to a first device, where the first device is a device different from the first terminal device.

The first information and the information about the first terminal device are used to test a V2X function of the first terminal device.

In this embodiment of this application, the vehicle test method is provided and applied to the field of intelligent driving technologies. The first terminal device sends the first information to the network device, and sends the information about the first terminal device to the first device. The first information and the information about the first terminal device are used to test the V2X function of the first terminal device. The first information includes the information about the V2X event associated with the first terminal device. According to this embodiment of this application, when a V2X scenario is triggered, the first terminal device reports the first information associated with the V2X event to the network device, and reports the information about the first terminal device to the first device, so that the network device can identify, in time, a result reported by the first terminal device, and can reversely verify correctness of the first information more accurately based on information for triggering the V2X scenario in the first information and the information about the first terminal device obtained by the first device, to test the V2X function of the first terminal device. In this embodiment of this application, one test system (including the first terminal device, the network device, and the first device) can support concurrent tests in a plurality of test areas. This greatly improves a vehicle test capability, is applicable to a large-scale vehicle test scenario, and has diversified test scenarios.

In a possible implementation, the first information includes information about a vehicle-to-vehicle V2V event associated with the first terminal device and/or information about a vehicle-to-infrastructure V2I event associated with the first terminal device.

In this embodiment of this application, a possible specific implementation of the first information is provided. Specifically, the first information includes the information about the V2V event and/or the information about the V2I event associated with the first terminal device. The V2V event includes but is not limited to events such as a forward collision warning, an emergency braking warning, and a vehicle out-of-control warning. The V2I event includes but is not limited to events such as a curve speed warning, a wrong-way driving warning, and an intersection facility-assisted emergency vehicle warning. This embodiment of this application may be applied to a vehicle test in scenarios including but not limited to a V2V scenario and a V2I scenario. Test scenarios are diversified, and concurrent tests in a plurality of test areas are supported. This greatly improves a vehicle test capability, and is applicable to a large-scale vehicle test scenario.

In a possible implementation, when the first information includes the information about the vehicle-to-vehicle V2V event associated with the first terminal device, the first information further includes first motion information of a second terminal device.

The first information and the information about the first terminal device are used to test a V2V function of the first terminal device.

In this embodiment of this application, a possible specific implementation of the first information is provided. Specifically, when the first information includes the information about the V2V event associated with the first terminal device, the first information further includes the first motion information of the second terminal device. In this case, the first information and the information about the first terminal device may be used to test the V2V function of the first terminal device. According to this embodiment of this application, the information about the first terminal device and the first motion information of the second terminal device may be used to verify authenticity of the V2V event, so that the information about the first terminal device and the first motion information of the second terminal device are used to test the V2V function of the first terminal device. In this embodiment of this application, the information about the first terminal device, the first motion information of the second terminal device, and computing power and a storage capability of the network device are used, so that the concurrent tests on the vehicle V2V function in the plurality of test areas can be supported. This greatly improves the vehicle test capability, and is applicable to the large-scale vehicle test scenario.

In a possible implementation, the information about the first terminal device includes second motion information of the first terminal device, and the second motion information is motion information for triggering the V2V event.

The first motion information and the second motion information are used to test the V2V function of the first terminal device.

In this embodiment of this application, a possible specific implementation of the information about the first terminal device is provided. Specifically, the information about the first terminal device includes the second motion information of the first terminal device, the second motion information is the motion information for triggering the V2V event, and the first motion information and the second motion information in this case are used to test the V2V function of the first terminal device. According to this embodiment of this application, the first motion information and the second motion information may be used to verify authenticity of the V2V event, so that the first motion information and the second motion information are used to test the V2V function of the first terminal device. In this embodiment of this application, the first motion information, the second motion information, and the computing power and the storage capability of the network device are used, so that the concurrent tests on the vehicle V2V function in the plurality of test areas can be supported. This greatly improves the vehicle test capability, and is applicable to the large-scale vehicle test scenario.

In a possible implementation, when the first information includes the information about the vehicle-to-infrastructure V2I event associated with the first terminal device, the first information further includes fourth motion information of the first terminal device and first road side information of a road on which the first terminal device is located.

The first information and the information about the first terminal device are used to test a V2I function of the first terminal device.

In this embodiment of this application, a possible specific implementation of the first information is provided. Specifically, when the first information includes the information about the V2I event associated with the first terminal device, the first information further includes the fourth motion information of the first terminal device and the first road side information of the road on which the first terminal device is located. In this case, the first information and the information about the first terminal device may be used to test the V2I function of the first terminal device. According to this embodiment of this application, the information about the first terminal device, the fourth motion information of the first terminal device, and the first road side information of the road on which the first terminal device is located may be used to verify authenticity of the V2I event, so that the foregoing information is used to test the V2I function of the first terminal device. In this embodiment of this application, the information about the first terminal device, the fourth motion information of the first terminal device, and the computing power and the storage capability of the network device are used, so that concurrent tests on a vehicle V2I function in a plurality of test areas can be supported. This greatly improves the vehicle test capability, and is applicable to the large-scale vehicle test scenario.

In a possible implementation, the first road side information includes information about a first road side event, and the first road side event is a road side event associated with the V2I event; or
the first road side information includes traffic light information and map information, and the traffic light information is information associated with the V2I event.

In this embodiment of this application, a possible specific implementation of the first road side information is provided. Specifically, the first road side information includes the information about the first road side event, or includes the traffic light information and the map information. The first road side event is the road side event associated with the V2I event. For example, the V2I event is a curve speed warning, and the first road side event associated with the V2I event may be a curve ahead notification. The traffic light information is the information associated with the V2I event. For example, the V2I event is an intersection facility-assisted emergency vehicle warning, and the traffic light information associated with the V2I event may be intersection red light warning information.

In a possible implementation, the information about the first terminal device includes fifth motion information of the first terminal device, and the fifth motion information is motion information for triggering the V2I event.

The fourth motion information, the fifth motion information, the first road side information, and second road side information are used to test the V2I function of the first terminal device, and the second road side information is road side information for triggering the V2I event.

In this embodiment of this application, a possible specific implementation of the information about the first terminal device is provided. Specifically, the information about the first terminal device includes the fifth motion information of the first terminal device, and the fifth motion information is the motion information for triggering the V2I event. In this case, the fourth motion information, the fifth motion information, the first road side information, and the second road side information may be used to test the V2I function of the first terminal device. According to this embodiment of this application, the fourth motion information, the fifth motion information, the first road side information, and the second road side information may be used to verify authenticity of the V2I event, so that the foregoing information is used to test the V2I function of the first terminal device. In this embodiment of this application, the fourth motion information, the fifth motion information, the first road side information, the second road side information, and the computing power and the storage capability of the network device are used, so that the concurrent tests on the vehicle V2I function in the plurality of test areas can be supported. This greatly improves the vehicle test capability, and is applicable to the large-scale vehicle test scenario.

In a possible implementation, the method further includes:
The first terminal device receives the first road side information sent by the network device, where the first road side information includes at least one of the information about the first road side event, the traffic light information, and the map information.

In this embodiment of this application, a possible specific implementation of receiving the first road side information is provided. Specifically, the first terminal device receives the first road side information sent by the network device, where the first road side information includes at least one of the information about the first road side event, the traffic light information, and the map information. In one aspect, the network device may identify the first road side event based on traffic flow information, and send the information about the first road side event to the first terminal device as the first road side information. In another aspect, the network device may further identify that the traffic light information is information associated with the V2I event, and send both the traffic light information and the map information to the first terminal device as the first road side information. According to this embodiment of this application, possible V2I function test scenarios such as a road side event-triggered V2I event and a traffic light information-triggered V2I event are separately provided, so that one test system can support concurrent tests in a plurality of test areas. This greatly improves the vehicle test capability.

According to a third aspect, an embodiment of this application provides a vehicle test apparatus. The apparatus includes:
a transceiver unit, configured to receive first information sent by a first terminal device, where the first information includes information about a vehicle-to-everything V2X event associated with the first terminal device, where
the transceiver unit is further configured to receive second information sent by a first device, the first device is a device different from the first terminal device, and the second information includes information about the first terminal device obtained by the first device; and
a processing unit, configured to test a V2X function of the first terminal device based on the first information and the second information.

In a possible implementation, the first information includes information about a vehicle-to-vehicle V2V event associated with the first terminal device and/or information about a vehicle-to-infrastructure V2I event associated with the first terminal device.

In a possible implementation, when the first information includes the information about the vehicle-to-vehicle V2V event associated with the first terminal device, the first information further includes first motion information of a second terminal device.

The processing unit is further configured to test a V2V function of the first terminal device based on the first information and the second information.

In a possible implementation, the second information includes second motion information of the first terminal device obtained by the first device, and the second motion information is motion information for triggering the V2V event.

The processing unit is further configured to verify the V2V event based on the first motion information and the second motion information.

In a possible implementation, the processing unit is further configured to: determine, based on the first motion information and the second motion information, whether the V2V event occurs; and
when it is determined that the V2V event occurs, verify that the V2V event is true; or
when it is determined that the V2V event does not occur, verify that the V2V event is false.

In a possible implementation, the processing unit is further configured to verify authenticity of the first motion information based on the V2V event and third motion information.

The third motion information is motion information that is from the first device and that is of a terminal device associated with the V2V event.

In a possible implementation, the processing unit is further configured to: when the first motion information is the same as the third motion information, determine that the first motion information is true; or
the processing unit is further configured to: when the first motion information is different from the third motion information, determine that the first motion information is false.

In a possible implementation, when the first information includes the information about the vehicle-to-infrastructure V2I event associated with the first terminal device, the first information further includes fourth motion information of the first terminal device and first road side information of a road on which the first terminal device is located.

The processing unit is further configured to test a V2I function of the first terminal device based on the first information and the second information.

In a possible implementation, the first road side information includes information about a first road side event, and the first road side event is a road side event associated with the V2I event; or
the first road side information includes traffic light information and map information, and the traffic light information is information associated with the V2I event.

In a possible implementation, the second information includes fifth motion information of the first terminal device obtained by the first device, and the fifth motion information is motion information for triggering the V2I event.

The processing unit is further configured to verify the V2I event based on the fourth motion information, the fifth motion information, the first road side information, and second road side information, where the second road side information is road side information for triggering the V2I event.

In a possible implementation, the second information further includes at least one of traffic flow information, the traffic light information, and the map information.

The transceiver unit is further configured to send the first road side information to the first terminal device, where the first road side information includes at least one of the information about the first road side event, the traffic light information, and the map information.

In a possible implementation, the processing unit is further configured to: determine, based on the fourth motion information, the fifth motion information, the first road side information, and the second road side information, whether the V2I event occurs; and
when it is determined that the V2I event occurs, verify that the V2I event is true; or
when it is determined that the V2I event does not occur, verify that the V2I event is false.

In a possible implementation, the processing unit is further configured to verify authenticity of the fourth motion information and the first road side information based on the V2I event, sixth motion information, and third road side information.

The sixth motion information is motion information that is from the first device and that is of a terminal device associated with the V2I event, and the third road side information is road side information that is from the first device and that is of the terminal device associated with the V2I event.

In a possible implementation, the processing unit is further configured to: when the fourth motion information is the same as the sixth motion information, determine that the fourth motion information is true; and
the processing unit is further configured to: when the first road side information is the same as the third road side information, determine that the first road side information is true; or
the processing unit is further configured to: when the fourth motion information is different from the sixth motion information, determine that the fourth motion information is false; and
the processing unit is further configured to: when the first road side information is different from the third road side information, determine that the first road side information is false.

For technical effects of the third aspect and any possible implementation, refer to descriptions of technical effects corresponding to the first aspect and a corresponding implementation.

According to a fourth aspect, an embodiment of this application provides a vehicle test apparatus. The apparatus includes:
a transceiver unit, configured to send first information to a network device, where the first information includes information about a vehicle-to-everything V2X event associated with the vehicle test apparatus.

The transceiver unit is further configured to send information about the vehicle test apparatus to a first device, where the first device is a device different from the vehicle test apparatus.

The first information and the information about the vehicle test apparatus are used to test a V2X function of the vehicle test apparatus.

In a possible implementation, the first information includes information about a vehicle-to-vehicle V2V event associated with the vehicle test apparatus, and/or information about a vehicle-to-infrastructure V2I event associated with the vehicle test apparatus.

In a possible implementation, when the first information includes the information about the vehicle-to-vehicle V2V event associated with the vehicle test apparatus, the first information further includes first motion information of a second terminal device.

The first information and the information about the vehicle test apparatus are used to test a V2V function of the vehicle test apparatus.

In a possible implementation, the information about the vehicle test apparatus includes second motion information of the vehicle test apparatus, and the second motion information is motion information for triggering the V2V event.

The first motion information and the second motion information are used to test the V2V function of the vehicle test apparatus.

In a possible implementation, when the first information includes the information about the vehicle-to-infrastructure V2I event associated with the vehicle test apparatus, the first information further includes fourth motion information of the vehicle test apparatus and first road side information of a road on which the vehicle test apparatus is located.

The first information and the information about the vehicle test apparatus are used to test a V2I function of the vehicle test apparatus.

In a possible implementation, the first road side information includes information about a first road side event, and the first road side event is a road side event associated with the V2I event; or
the first road side information includes traffic light information and map information, and the traffic light information is information associated with the V2I event.

In a possible implementation, the information about the vehicle test apparatus includes fifth motion information of the vehicle test apparatus, and the fifth motion information is motion information for triggering the V2I event.

The fourth motion information, the fifth motion information, the first road side information, and second road side information are used to test the V2I function of the vehicle test apparatus, and the second road side information is road side information for triggering the V2I event.

In a possible implementation, the transceiver unit is further configured to receive the first road side information sent by the network device, and the first road side information includes at least one of the information about the first road side event, the traffic light information, and the map information.

For technical effects of the fourth aspect and any possible implementation, refer to descriptions of technical effects corresponding to the second aspect and a corresponding implementation.

According to a fifth aspect, an embodiment of this application provides an electronic device. The electronic device includes a processor. The processor is coupled to a memory, and may be configured to execute instructions in the memory, to implement the method in any one of the first aspect, the second aspect, and the possible implementations of the first aspect and the second aspect. Optionally, the electronic device further includes the memory. Optionally, the electronic device further includes a communication interface, and the processor is coupled to the communication interface.

According to a sixth aspect, an embodiment of this application provides a computer-readable storage medium. The computer-readable storage medium is configured to store a computer program (which may also be referred to as code or an instruction). When the computer program is run on a computer, the method according to any one of the first aspect, the second aspect, and the possible implementations of the first aspect and the second aspect is implemented.

According to a seventh aspect, an embodiment of this application provides a computer program product. The computer program product includes: a computer program (which may also be referred to as code or an instruction). When the computer program is run, a computer is enabled to perform the method according to any one of the first aspect, the second aspect, and the possible implementations of the first aspect and the second aspect.

According to an eighth aspect, an embodiment of this application provides a chip. The chip includes a processor, the processor is configured to execute instructions, and when the processor executes the instructions, the chip is enabled to perform the method according to any one of the first aspect, the second aspect, and the possible implementations of the first aspect and the second aspect. Optionally, the chip further includes a communication interface, and the communication interface is configured to: receive a signal or send a signal.

According to a ninth aspect, an embodiment of this application provides a vehicle end. The vehicle end includes at least one vehicle test apparatus according to the fourth aspect, the electronic device according to the fifth aspect, or the chip according to the eighth aspect.

According to a tenth aspect, an embodiment of this application provides a system. The system includes the vehicle end according to the ninth aspect and at least one of the vehicle test apparatus according to the third aspect, the electronic device according to the fifth aspect, or the chip according to the eighth aspect.

According to an eleventh aspect, an embodiment of this application provides a system. The system includes a network device and a first terminal device, the network device is configured to perform the method according to any one of the first aspect and the possible implementations of the first aspect, and the first terminal device is configured to perform the method according to any one of the second aspect and the possible implementations of the second aspect.

In addition, in a process of performing the method according to any one of the first aspect, the second aspect, and the possible implementations of the first aspect and the second aspect, a process related to sending information and/or receiving information and the like in the method may be understood as a process of outputting information by a processor and/or a process of receiving input information by the processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, transmitting, sending, receiving, and other operations related to the processor may be more generally understood as output, receiving, input, and other operations of the processor, unless otherwise specified, or provided that the operations do not conflict with actual functions or internal logic of the operations in related descriptions.

Optionally, in a process of performing the method according to any one of the first aspect, the second aspect, and the possible implementations of the first aspect and the second aspect, the processor may be a processor specially configured to perform the method, or may be a processor, for example, a general-purpose processor, that performs the method by executing computer instructions in a memory. The memory may be a non-transitory (non-transitory) memory, for example, a read-only memory (Read-Only Memory, ROM). The memory and the processor may be integrated in a same chip, or may be separately disposed in different chips. A type of the memory and a manner of disposing the memory and the processor are not limited in embodiments of this application.

In a possible implementation, the at least one memory is located outside an apparatus.

In another possible implementation, the at least one memory is located in an apparatus.

In still another possible implementation, a part of memories in the at least one memory are located in an apparatus, and the other part of memories are located outside the apparatus.

In this application, the processor and the memory may alternatively be integrated into one component. In other words, the processor and the memory may alternatively be integrated together.

In embodiments of this application, a network device can identify, in time, first information that is reported by a first terminal device and that is associated with a V2X event when a V2X scenario is triggered, and can reversely verify correctness of the first information more accurately based on information for triggering the V2X scenario in the first information and information about the first terminal device reported by a first device, to test a V2X function of the first terminal device. In addition, computing power and a storage capability of the network device are used, so that one test system can support concurrent tests in a plurality of test areas. This greatly improves a vehicle test capability, is applicable to a large-scale vehicle test scenario, and has diversified test scenarios.

### BRIEF DESCRIPTION OF DRAWINGS

To describe the technical solutions in embodiments of this application more clearly, the following briefly describes the accompanying drawings used in embodiments of this application. It is clear that, the accompanying drawings described below show merely some embodiments of this application, and a person of ordinary skill in the art may still derive other drawings from these accompanying drawings without creative efforts.
FIG. 1 is a diagram of a scenario of a vehicle-cloud collaborative communication system according to an embodiment of this application;
FIG. 2 is a diagram of an architecture of a vehicle-cloud collaborative communication system according to an embodiment of this application;
FIG. 3 is a schematic flowchart of a vehicle test method according to an embodiment of this application;
FIG. 4 is a diagram of a V2V scenario according to an embodiment of this application;
FIG. 5 is a diagram of a V2V function test according to an embodiment of this application;
FIG. 6 is a diagram of a V2I scenario according to an embodiment of this application;
FIG. 7 is a diagram of a V2I function test according to an embodiment of this application;
FIG. 8 is a diagram of a V2I function test according to an embodiment of this application;
FIG. 9 is a diagram of a vehicle supervision scenario according to an embodiment of this application;
FIG. 10 is a diagram of a structure of a vehicle test apparatus according to an embodiment of this application;
FIG. 11 is a diagram of a structure of an electronic device according to an embodiment of this application; and
FIG. 12 is a diagram of a structure of a chip according to an embodiment of this application.

### DESCRIPTION OF EMBODIMENTS

To make objectives, technical solutions, and advantages of this application clearer, the following describes embodiments of this application with reference to accompanying drawings in embodiments of this application.

Terms "first", "second", and the like in the specification, claims, and accompanying drawings of this application are used to distinguish between different objects, but are not used to describe a specific sequence. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It can be explicitly and implicitly understood by a person skilled in the art that, in embodiments of this application, unless otherwise specified or a logical conflict occurs, terms and/or descriptions in embodiments are consistent and may be mutually referenced, and technical features in different embodiments may be combined based on an internal logical relationship thereof, to form a new embodiment.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b c, "a and b", "a and c", "b and c", or "a, b and c", where a, b and c may be singular or plural.

A method provided in this application may be used in various communication systems, for example, an internet of things (internet of things, IoT) system, a narrowband internet of things (narrowband internet of things, NB-IoT) system, a long term evolution (long term evolution, LTE) system, a 5th-generation (5th-generation, 5G) communication system, and a new communication system (for example, 6G) emerging in future communication development.

Technical solutions provided in this application may be further used in machine type communication (machine type communication, MTC), a long term evolution-machine (long term evolution-machine, LTE-M) technology, a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle-to-everything (vehicle-to-everything, V2X, where X may represent everything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

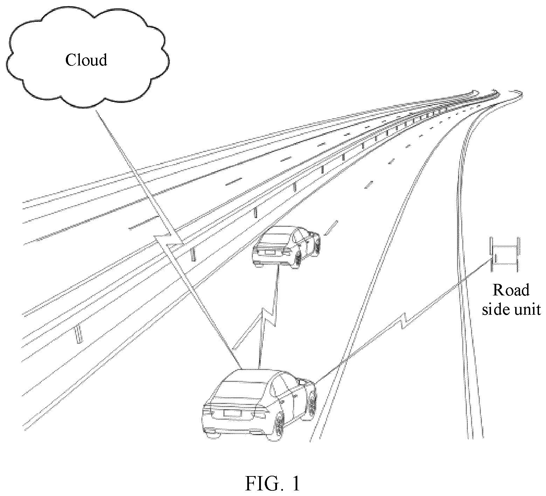

For example, in FIG. 1 shown below, terminal devices may communicate with each other by using a V2X technology or the like.

FIG. 1 is a diagram of a scenario of a vehicle-cloud collaborative communication system according to an embodiment of this application.

As shown in FIG. 1, the communication system includes a vehicle and a service end. The service end may be a cloud, and the cloud may include a cloud server and/or a cloud virtual machine. The service end may communicate with the vehicle, to provide a plurality of services, for example, an over-the-air (over-the-air, OTA) upgrade service, a high-definition map service, and an autonomous driving or assisted driving service, for the vehicle.

For example, in the over-the-air (OTA) upgrade service, a software manager may upload software to the cloud, and the vehicle may automatically download the software from the cloud or a user selects to download the software from the cloud, to update local software, to implement function upgrade or function update of a local vehicle system. For example, an infotainment (infotainment) system of the vehicle may be upgraded by using the OTA. For another example, an electronic control unit (electronic control unit, ECU) of the vehicle may be upgraded by using the OTA, and vehicle performance may be upgraded through ECU upgrade. For another example, a vehicle suspension system may be adjusted by using the OTA, to provide more comfortable driving or ride experience for the user.

The vehicle may download high-definition map data from the cloud to obtain a high-definition map, to provide a more accurate navigation service for the user. Road information is updated frequently. This service can not only update road information to the map in a more timely manner, but also reduce a local requirement of the vehicle for storage space. For example, for a large city or region, an entire set of high-definition maps has a large amount of data. The high-definition map service provided by the cloud is used, so that the vehicle can obtain a high-definition map of a small area of a current location in real time during traveling. In addition, the high-definition map of the area can be released from the vehicle when the map is not required.

The vehicle may interact with the cloud, to improve an autonomous driving or assisted driving function, to improve safety and travel efficiency of the vehicle. For example, the vehicle may collect road surface information and surrounding vehicle information by using a sensing apparatus mounted on the vehicle, and upload the collected information to the cloud. The cloud performs driving algorithm training in different scenarios based on the collected information, continuously optimizes a driving algorithm as training data is updated, and updates the driving algorithm to the vehicle, so that an autonomous driving capability of the vehicle to cope with various scenarios is continuously improved. For another example, for a neural network-based image processing algorithm used by a perception apparatus, training of the image processing algorithm may be completed on the cloud, and is updated with update of training data. Correspondingly, the vehicle may obtain an updated image processing algorithm from the cloud, so that an image processing capability of the perception apparatus can be improved. For another example, in bad weather, the vehicle may obtain weather information and road traffic accident information through the cloud, to assist the vehicle in planning, improve travel efficiency, and reduce a risk of a vehicle accident. Alternatively, the cloud may send real-time road information, for example, traffic light information, to the vehicle. In this way, the vehicle may receive a traffic light change time interval of a front intersection in advance, and calculate, based on a current vehicle speed, time used by the vehicle to pass through the intersection, to determine an appropriate and safe passing occasion, and plan a traveling speed of the vehicle. In this way, not only vehicle energy consumption can be reduced, but also driving safety can be improved.

In addition, the vehicle may obtain a third-party service through the cloud. For example, under authorization of a driver, a courier may open the trunk of the vehicle through one-time digital authorization, and place an item in the vehicle, so that the driver can receive an express without being present.

The vehicle may exchange information with the cloud through wireless communication. The wireless communication may comply with a wireless protocol of a network accessed by the vehicle, for example, cellular V2X (C-V2X) communication. A cellular network is, for example, a long term evolution (long term evolution, LTE) wireless network or a 5th-generation (5th-generation, 5G) wireless network.

Optionally, the communication system may further include a road side unit (road side unit, RSU). The road side unit may be mounted on a road side, and may communicate with the cloud and the vehicle. A road side unit communicating with the cloud may be considered as a terminal apparatus similar to the vehicle. A road side unit communicating with the vehicle may be considered as a terminal apparatus similar to the vehicle, or may be considered as a service-end apparatus of the vehicle. The road side unit may interact with the vehicle or the cloud through wireless communication. The road side unit may communicate with the vehicle by using a dedicated short-range communication (dedicated short-range communication, DSRC) technology, or through cellular V2X (C-V2X) communication, for example, a long term evolution (long term evolution, LTE)-based communication protocol or a 5th generation (5th generation, 5G)-based communication protocol. The road side unit may communicate with the cloud through cellular V2X (C-V2X) communication, for example, a long term evolution (long term evolution, LTE)-based communication protocol or a 5th generation (5th generation, 5G)-based communication protocol. The road side unit may provide a service for the vehicle, for example, implement vehicle identity identification, electronic toll collection, electronic score deduction, or the like. A sensing apparatus may be mounted in the road side unit, to collect road information, to provide a vehicle-road collaboration service. The road side unit may be connected to a road side traffic sign (for example, an electronic traffic light or an electronic speed limit sign), to implement real-time control on the traffic light or the speed limit sign, or may provide the road information to the vehicle through the cloud or directly, to improve the autonomous driving or assisted driving function.

It may be understood that the vehicle shown in this application may not only include a vehicle (for example, an entire vehicle) in the internet of vehicles, but also include a vehicle-mounted device, a vehicle-mounted terminal, or the like in the internet of vehicles. A specific form of the vehicle applied to the internet of vehicles is not limited in this application.

It may be understood that the diagram of the scenario of the vehicle-cloud collaborative communication system shown in FIG. 1 is merely an example. For a diagram of a scenario of another form of communication system, refer to a related standard, protocol, or the like. Details are not described herein again.

In an application scenario including but not limited to autonomous driving shown in FIG. 1, an intelligent vehicle may exchange information with the outside by using a V2X technology, to obtain a series of traffic information such as real-time road conditions, road information, and pedestrian information; and analyze the traffic information, to improve driving safety and traffic efficiency. Therefore, it is important to test a V2X application function of the intelligent vehicle. However, in a current test method for the V2X application function, a test amount per unit time depends on a quantity of test devices, and a test capability is weak. Therefore, the test method is not applicable to a large-scale vehicle test scenario, and a test scenario is simple.

For technical problems existing in the test method for the V2X application function that the test amount per unit time depends on the quantity of test devices, the test capability is weak, the test method is not applicable to the large-scale vehicle test scenario, and the test scenario is simple, in embodiments of this application, an architecture of a vehicle-cloud collaborative communication system is provided, and a vehicle test method is correspondingly proposed based on the architecture, to improve a test capability, be applied to a large-scale vehicle test scenario, and have diversified test scenarios.

The following separately describes the architecture of the vehicle-cloud collaborative communication system and the vehicle test method provided in this application with reference to the accompanying drawings.

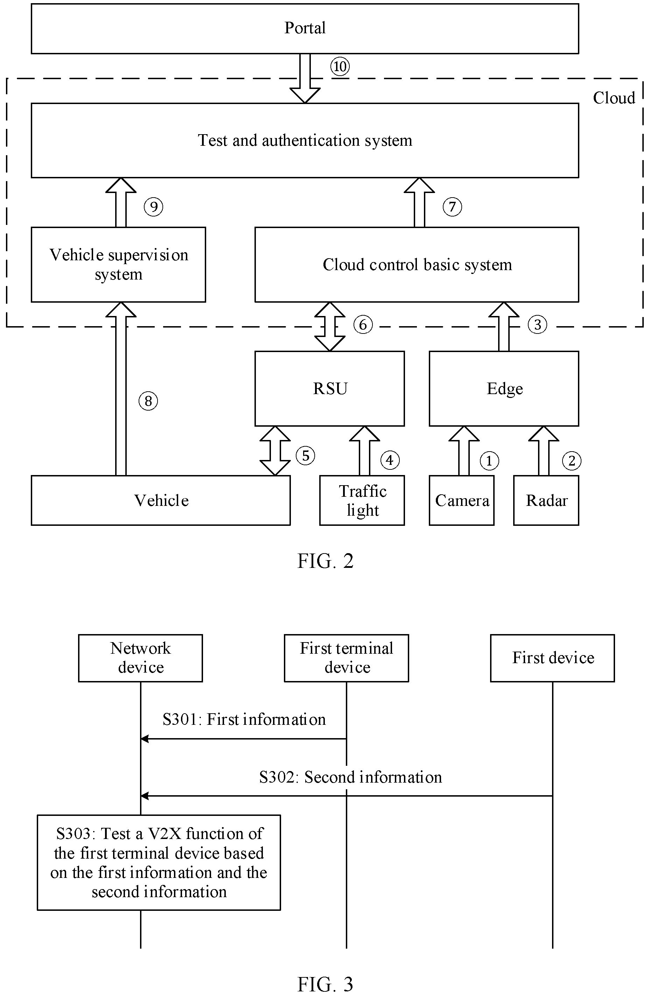

FIG. 2 is a diagram of an architecture of a vehicle-cloud collaborative communication system according to an embodiment of this application.

As shown in FIG. 2, the communication system includes a vehicle, a service end, and a road side device.

The service end may be a cloud, and the cloud may include a cloud device like a cloud server and/or a cloud virtual machine. Specifically, the cloud may include but is not limited to a test and authentication system, a vehicle supervision system, and a cloud control basic system.

The road side device may include a device like a road side unit (road side unit, RSU) or an edge computing unit (Edge). Optionally, the RSU and the Edge may be integrated into one road side device.

Optionally, the communication system may further include a sensing device like a traffic light, a camera, or a radar, configured to collect and report sensing data/information of road conditions or a traffic participant like a vehicle. For example, the traffic light may be used to report red/green light information, slow-down warning light information, and the like. The camera may be used to capture information about the traffic participant, a pedestrian, the road conditions, or the like in a manner of taking a snapshot, recording a video, or the like and report the information. The radar may collect information about the traffic participant, a pedestrian, the road conditions, or the like by transmitting a laser signal, a millimeter wave, or another detection signal and report the information.

Optionally, the communication system may further include an upper-layer application (portal). A user may enter test content or obtain a test result via the upper-layer application.

Based on the vehicle-cloud collaborative communication system shown in FIG. 2, the cloud may communicate with the vehicle and the road side device, to provide a plurality of services for the vehicle, for example, the foregoing OTA service, high-definition map service, and autonomous driving or assisted driving service.

A V2X function test service is used as an example. The vehicle reports a V2X application message to the cloud when a V2X scenario is triggered, the road side device reports obtained vehicle-related information to the cloud, and the cloud tests a V2X function of the vehicle by using the V2X application message reported by the vehicle and the vehicle-related information reported by the road side device.

The following describes a general test procedure used in a V2X application scenario in an intelligent connected vehicle test field based on functional modules included in the vehicle-cloud collaborative communication system shown in FIG. 2. Details are as follows:
(1) Before a test starts, log in to the test and authentication system on a mobile terminal, enter information about a test vehicle, select a test item, and pre-check a device status and a communication status in a test field through a message ⑦. After the test starts, test content and vehicle information are synchronously delivered to the test and authentication system through a message ⑩.
(2) A camera deployed at a location like a road side or an intersection in the test field uploads, through a message ①, an image and video data of a traffic participant on a road in the test field to an edge computing unit Edge deployed on the road side.
(3) A radar uploads the data of the traffic participant on the road to the edge computing unit Edge through a message ②.
(4) The Edge device processes real-time radar data and image/video data in the test field according to an algorithm of the Edge device, extracts information about the traffic participant, and pushes the information to the cloud through an interface/a message ③. The information may include but is not limited to a location, a speed, a course, a type, a size, and the like of a target object.
(5) A signal controller at the location like the road side or the intersection in the test field is directly connected to the road side unit RSU, and reports a real-time status of the traffic light to the cloud control basic system through the RSU in a message format of traffic light message (signal phase and timing message, SPAT) (a message ⑥.
(6) When a message ⑤ is transmitted in an uplink direction, the test vehicle sends a basic safety message (basic safety message, BSM) to the RSU device through an interface (for example, a PC5 interface) of the test vehicle, and then the RSU sends the message to the cloud through the message ⑥. When the message ⑤ is transmitted in a downlink direction, the RSU broadcasts the SPAT, road side information (road side information, RSI), a road side message (road side message, RSM), and a map (MAP) message to the test vehicle, where the RSI focuses on road/road condition information, and the RSM focuses on the information about the traffic participant.
(7) When the message ⑥ is transmitted in an uplink direction, the RSU reports the SPAT and BSM messages to the cloud control basic system for processing. When the message ⑥ is transmitted in a downlink direction, the RSI, RSM, and MAP messages generated by the cloud are delivered to the RSU device.
(8) The cloud control basic system generates an RSI message and/or an RSM message based on traffic participant data reported by the Edge device and by using an RSI event identification algorithm and/or an RSM event identification algorithm of the cloud control basic system. Then, the cloud control basic system accurately delivers the RSI, RSM, and MAP messages to the RSU device within a test range according to an event matching algorithm through the message ⑥. In addition, the cloud control basic system reports the generated RSI, RSM, and MAP messages and the SPAT and BSM messages uploaded by the RSU to the test and authentication system through the message ⑦. The test and authentication system verifies a V2X function of the test vehicle.
(9) In a V2V scenario, the test vehicle encapsulates a V2V event generated by the test vehicle and BSM data of the test vehicle into a V2X application message, and uploads the message to the vehicle supervision system through a message ⑧ (an Mqtt protocol). In a V2I scenario, the test vehicle encapsulates the received RSI, RSM, MAP, and SPAT messages, and BSM data of the test vehicle into a V2X application message, and sends the message to the vehicle supervision system through a message ⑧ (the Mqtt protocol).
(10) The vehicle supervision system forwards, to the test and authentication system through a message ⑨, the V2X application message sent by the vehicle. The V2X application message is used as result data of the V2X function of the test vehicle, and triggers the test and authentication system to evaluate a result of a current test item of the vehicle, identify whether the current test item passes, and provide performance evaluation of the V2X function of the vehicle.
(11) After the test vehicle completes a test task, the test and authentication system provides a test result for the current test item based on the message ⑧ and the message ⑨. After the current test item is completed, the test system proceeds to a next test item and repeats steps (2) to (9). After all test items are completed, the test and authentication system provides a test report for all the test items, including information about the V2X function and V2X performance of the vehicle. Optionally, the portal may be used to download the test report through an interface (a message ⑩.

It can be learned from steps (1) to (11) that, in a process of performing a V2X function test on a vehicle in a V2X scenario, how a test system obtains a V2X event generated by a tested vehicle or receives a V2X message from a cloud determines whether the test system is reliable and whether the test system can accurately capture, in time, a key message of the V2X scenario generated by the tested vehicle. In addition, the captured message for triggering the V2X scenario is used for verifying authenticity of the test scenario, which determines the reliability of the test system.

However, the test system in embodiments of this application can accurately evaluate performance of the V2X function of the tested vehicle, and can verify authenticity of the test scenario. In the test procedure in embodiments of this application, the V2X application message exchanged between the vehicle and the cloud is innovatively defined. When the V2X scenario is triggered, the tested vehicle encapsulates the message for triggering the V2X scenario into the V2X application message, and uploads the V2X application message to the test and authentication system. The test and authentication system can identify, in time, a result reported by the tested vehicle, and can reversely verify correctness of the V2X message more accurately based on message content for triggering the V2X scenario in the V2X application message.

For example, the V2X application message may include but is not limited to the following content:
deviceId: a device identity (Identity, id) of the tested vehicle, where this field is mandatory;
eventType: a V2X application event type, which is an abbreviation of an application scenario defined by various standards or manually specified, for example, "FCW" is filled in for a forward collision warning scenario, where this field is mandatory;
refBsm: Base64 code of an original BSM of a remote vehicle that triggers a V2V scenario in the V2V scenario, where this field is optional;
refMap: Base64 code of an original MAP message delivered by the cloud in a V2I scenario, where this field is optional;
refRsm: Base64 code of an original RSM message delivered by the cloud in the V2I scenario, where this field is optional;
refRsi: Base64 code of an original RSI message delivered by the cloud in the V2I scenario, where this field is optional;
refSpat: Base64 code of an original SPAT message broadcast by the RSU in the V2I scenario, where this field is optional;
timestamp: message generation time, where this field is mandatory;
timeToEvent: time to arrive at a location of a distance warning event, indicating predicted time when the vehicle collides with another vehicle in the V2V scenario, and indicating time when the vehicle travels to a location of an RSI event or time when the vehicle travels to an intersection at which a traffic light is located in the V2I scenario, where this field is optional;
distanceToEvent: a distance to the location of the distance warning event, indicating a distance between the vehicle and the another vehicle in the V2V scenario, and indicating a distance between the vehicle and the location of the RSI event or a distance between the vehicle and the intersection at which the traffic light is located in the V2I scenario, where this field is optional; and
speedRange: indicating a recommended vehicle speed range in a vehicle speed guidance scenario or a red light violation warning scenario, where this field is optional.

It may be understood that internal modules of the vehicle-cloud collaborative communication system shown in FIG. 2 are obtained through division based on logical functions. During actual application, a function of one module may be implemented by a plurality of modules, or functions of a plurality of modules may be implemented by one module. The vehicle-cloud collaborative communication system in embodiments of this application is merely used as a possible architecture implementation, and should not constitute a limitation on this application.

It may be understood that the architecture of the vehicle-cloud collaborative communication system shown in FIG. 2 may be applied to the scenario of the vehicle-cloud collaborative communication system shown in FIG. 1, or may be applied to a scenario of another vehicle-cloud collaborative communication system, for example, an autonomous driving scenario in a port, an autonomous driving scenario in a mine, a closed campus, or the like, or an autonomous driving scenario on an open road. This is not limited in this application.

FIG. 3 is a schematic flowchart of a vehicle test method according to an embodiment of this application. The vehicle test method is applied to the field of intelligent driving technologies, and may be specifically applied to the scenario of the vehicle-cloud collaborative communication system shown in FIG. 1, or may be applied to the architecture of the vehicle-cloud collaborative communication system shown in FIG. 2, or may be applied to a scenario or an architecture of another vehicle-cloud collaborative communication system. This is not limited in embodiments of this application.

Specifically, the vehicle test method in embodiments of this application mainly relates to a network device, a first terminal device, and a first device.

The first terminal device in embodiments of this application is a device equipped with a processor that can be configured to execute computer-executable instructions, may be a terminal device (for example, a vehicle-mounted terminal) or the like, may be specifically the vehicle in FIG. 1, the vehicle in FIG. 2, or another driving apparatus having a function of the vehicle, and is configured to perform the vehicle test method in embodiments of this application. When a V2X scenario is triggered, the first terminal device reports first information associated with a V2X event to the network device, and reports information about the first terminal device to the first device, so that the network device can identify, in time, a result reported by the first terminal device, and can reversely verify correctness of the first information more accurately based on information for triggering the V2X scenario in the first information and the information about the first terminal device obtained by the first device, to test a V2X function of the first terminal device.

The network device in embodiments of this application is a device equipped with a processor that can be configured to execute computer-executable instructions, may be a service end device (for example, a server) or the like, may be specifically the cloud in FIG. 1, the cloud in FIG. 2, another component like a server or a virtual machine that has a function of the cloud, or a device integrating the cloud shown in FIG. 1 and/or FIG. 2, and is configured to perform the vehicle test method in embodiments of this application. The network device identifies the first information that is reported by the first terminal device and that is associated with the V2X event when the V2X scenario is triggered, and can reversely verify correctness of the first information more accurately based on the information for triggering the V2X scenario in the first information and the information about the first terminal device reported by the first device, to test the V2X function of the first terminal device. In addition, computing power and a storage capability of the network device are used, so that one test system can support concurrent tests in a plurality of test areas. This greatly improves a vehicle test capability, is applicable to a large-scale vehicle test scenario, and has diversified test scenarios.

The first device in embodiments of this application is a device equipped with a processor that can be configured to execute computer-executable instructions, may be a road side device (like an RSU or an edge computing device Edge), or the like, may be specifically the road side unit in FIG. 1, the RSU and the Edge in FIG. 2, another component that has a function of the road side unit and/or the RSU and/or the Edge, or a device integrating the road side unit and/or the RSU and/or the Edge shown in FIG. 1 and/or FIG. 2, and is configured to perform the vehicle test method in embodiments of this application.

Specifically, the vehicle test method in embodiments of this application includes but is not limited to the following steps:
S301: The first terminal device sends the first information to the network device, and correspondingly, the network device receives the first information sent by the first terminal device.

The first information includes information about the V2X event associated with the first terminal device.

Optionally, for content included in the first information in embodiments of this application, refer to content included in the message ⑧ (namely, the V2X application message) in FIG. 2. Details are not described herein again.

When the V2X scenario is triggered, the first terminal device generates the V2X event, and reports, to the network device, information (namely, the first information) associated with the V2X event. Correspondingly, when the V2X scenario is triggered, the network device receives the first information sent by the first terminal device.

In a possible embodiment, the first information includes but is not limited to information about a V2V event and/or information about a V2I event associated with the first terminal device. The V2V event includes but is not limited to events such as a forward collision warning, an emergency braking warning, and a vehicle out-of-control warning. The V2I event includes but is not limited to events such as a curve speed warning, a wrong-way driving warning, and an intersection facility-assisted emergency vehicle warning.

For example, the following provides event information of some V2X application scenarios defined by various standards or manually specified, as shown in the following table.

**Table 1**

| Name of a V2X application event | Implementation of a V2X application scenario |
|---|---|
| Forward collision warning | V2V |
| Side collision warning | V2V/V2I |
| Rear collision warning | V2V/V2I |
| Emergency braking warning | V2V |
| Abnormal out-of-control warning | V2V/V2I |
| Vehicle out-of-control warning | V2V |
| Blind spot warning/Lane change assist | V2V |
| Left turn assist | V2V |
| Giving way to high-priority vehicles | V2V |
| Emergency vehicle signal priority | V2V/V2I |
| Collaborative adaptive cruise control | V2V |

**Table 2**

| Name of a V2X application event | Implementation of a V2X application scenario |
|---|---|
| Road safety warning | V2I/V2N |
| Curve speed warning | V2I |
| Wrong-way driving warning | V2I |
| Wrong driving warning | V2I |
| Speed warning | V2I/V2N |
| Intersection collision warning | V2I |
| Intersection facility-assisted emergency vehicle warning | V2I |
| Safe driving assistance prompt based on environmental object sensing | V2I |
| Collision warning of vulnerable traffic participants | V2P/V2I |
| In-vehicle sign | V2I |
| Congestion ahead notification | V2I/V2N |
| Exclusive road management warning | V2I |
| Road construction warning | V2I/V2N |
| Access restriction warning | V2I/V2N |
| Service information bulletin | V2I/V2N |

It can be learned from the foregoing tables listing event information in various V2X application scenarios that Table 1 provides an example of information about V2V events in 11 V2V scenarios, and Table 2 provides an example of information about V2I events in 15 V2I scenarios.

It should be understood that Table 1 and Table 2 are merely examples of event information for description, and should not constitute a limitation on events in various V2X application scenarios to which embodiments of this application are applicable.

Embodiments of this application may be applied to a vehicle test in scenarios including but not limited to a V2V scenario and a V2I scenario. Test scenarios are diversified, and concurrent tests in a plurality of test areas are supported. This can greatly improve a vehicle test capability, and is applicable to a large-scale vehicle test scenario.

S302: The first device sends second information to the network device, and correspondingly, the network device receives the second information sent by the first device.

The second information includes the information about the first terminal device obtained by the first device, and may specifically include but is not limited to motion information (for example, the BSM) of the first terminal device.

It may be understood that there is no specific execution sequence between steps S301 and S302. S301 may be performed before S302, or S302 may be performed before S301, or S301 and S302 may be concurrently performed. This is not limited in embodiments of this application.

Based on a plurality of types of information content that may be included in the first information in step S301 and the second information in step S302, there may be a plurality of corresponding possible embodiments to perform step S303.

S303: The network device tests the V2X function of the first terminal device based on the first information and the second information.

In a possible embodiment,
the first information includes the information about the V2V event associated with the first terminal device and first motion information of a second terminal device. The second information includes the information about the first terminal device reported by the first device, and may specifically include second motion information of the first terminal device obtained by the first device.

Optionally, the network device may further select motion information corresponding to the V2V event from the second information based on the V2V event, and determine the motion information as the second motion information.

For example, specifically, the network device may determine, in the second information based on a timestamp of the V2V event, the motion information obtained when the V2V event occurs as the second motion information.

The second terminal device in embodiments of this application is a terminal device different from the first terminal device. It may be understood that the first terminal device is a test vehicle, and the second terminal device is a tested vehicle relative to the first terminal device, and may also be referred to as a remote vehicle/another vehicle or the like.

The first motion information is motion information (for example, a BSM) of the second terminal device, the second motion information is motion information (for example, a BSM) of the first terminal device obtained by the first device, and the second motion information is motion information for triggering the V2V event.

In embodiments of this application, that the network device tests the V2X function of the first terminal device based on the first information and the second information may be specifically testing a V2V function of the first terminal device. The network device verifies the V2V event based on the first motion information and the second motion information, to test the V2V function of the first terminal device.

Specifically, the network device determines, based on the first motion information and the second motion information, whether the V2V event occurs; and
when determining that the V2V event occurs, the network device verifies that the V2V event is true; or
when determining that the V2V event does not occur, the network device verifies that the V2V event is false.

According to embodiments of this application, computing power and a storage capability of the network device are used, so that concurrently verifying a plurality of V2V events can be supported, to implement concurrent tests on the vehicle V2V function in a plurality of test areas. This greatly improves a vehicle test capability, and is applicable to a large-scale vehicle test scenario.

Optionally, in embodiments of this application, the network device may further verify authenticity of the first motion information, to improve authenticity of the first motion information.

Specifically, the network device verifies authenticity of the first motion information based on the V2V event and third motion information.

The third motion information is motion information that is from the first device and that is of a terminal device associated with the V2V event.

When the first motion information is the same as the third motion information, the network device determines that the first motion information is true; or
when the first motion information is different from the third motion information, the network device determines that the first motion information is false.

According to embodiments of this application, authenticity of the first motion information is verified by using the third motion information, so that authenticity of the first motion information can be improved, to improve accuracy and reliability of verifying the V2V event.

In a possible embodiment,
the first information includes the information about the V2I event associated with the first terminal device, fourth motion information of the first terminal device, and first road side information of a road on which the first terminal device is located. The second information includes the information about the first terminal device reported by the first device, and may specifically include fifth motion information of the first terminal device obtained by the first device.

Optionally, the network device may further select motion information corresponding to the V2I event from the second information based on the V2I event, and determine the motion information as the fifth motion information.

For example, specifically, the network device may determine, in the second information based on a timestamp of the V2I event, motion information obtained when the V2I event occurs as the fifth motion information.

The first road side information includes information about a first road side event. The first road side event is a road side event associated with the V2I event. For example, the V2I event is a curve speed warning, and the first road side event associated with the V2I event may be a curve ahead notification.

Optionally, the network device further sends the first road side information to the first terminal device. The first road side information includes the information about the first road side event, and the first road side information is used by the first terminal device to trigger generation of the V2I event.

Specifically, the second information received by the network device may include traffic flow information, and the traffic flow information is obtained after the first device performs calculation processing on data collected by a sensor like a camera or a radar. The network device identifies the first road side event based on the traffic flow information, and sends the information about the first road side event to the first terminal device as the first road side information.

In embodiments of this application, that the network device tests the V2X function of the first terminal device based on the first information and the second information may be specifically testing a V2I function of the first terminal device. The network device verifies the V2I event based on the fourth motion information, the fifth motion information, the first road side information, and second road side information, to test the V2I function of the first terminal device.

The second road side information is road side information for triggering the V2I event.

Specifically, the network device determines, based on the fourth motion information, the fifth motion information, the first road side information, and the second road side information, whether the V2I event occurs; and
when determining that the V2I event occurs, the network device verifies that the V2I event is true; or
when determining that the V2I event does not occur, the network device verifies that the V2I event is false.

According to embodiments of this application, computing power and a storage capability of the network device are used, so that concurrently verifying a plurality of V2I events can be supported, to implement concurrent tests on the vehicle V2I function in a plurality of test areas. This greatly improves a vehicle test capability, and is applicable to a large-scale vehicle test scenario.

Optionally, in embodiments of this application, the network device may further verify authenticity of the fourth motion information and the first road side information, to improve authenticity of the fourth motion information and the first road side information.

Specifically, the network device verifies authenticity of the fourth motion information and the first road side information based on the V2I event, sixth motion information, and third road side information.

The sixth motion information is motion information that is from the first device and that is of a terminal device associated with the V2I event, and the third road side information is road side information that is from the first device and that is of the terminal device associated with the V2I event.

When the fourth motion information is the same as the sixth motion information, the network device determines that the fourth motion information is true; and
when the first road side information is the same as the third road side information, the network device determines that the first road side information is true; or
when the fourth motion information is different from the sixth motion information, the network device determines that the fourth motion information is false; and
when the first road side information is different from the third road side information, the network device determines that the first road side information is false.

According to embodiments of this application, authenticity of the fourth motion information is verified by using the sixth motion information, and authenticity of the first road side information is verified by using the third road side information, so that authenticity of the fourth motion information and the first road side information can be improved, to improve accuracy and reliability of verifying the V2I event.

In a possible embodiment,
the first information includes the information about the V2I event associated with the first terminal device, fourth motion information of the first terminal device, and first road side information of a road on which the first terminal device is located. The second information includes the information about the first terminal device reported by the first device, and may specifically include fifth motion information of the first terminal device obtained by the first device.

Optionally, the network device may further select motion information corresponding to the V2I event from the second information based on the V2I event, and determine the motion information as the fifth motion information.

For example, specifically, the network device may determine, in the second information based on a timestamp of the V2I event, motion information obtained when the V2I event occurs as the fifth motion information.

The first road side information includes traffic light information and map information. The traffic light information is information associated with the V2I event. For example, the V2I event is an intersection facility-assisted emergency vehicle warning, and the traffic light information associated with the V2I event may be intersection red light warning information.

Optionally, the network device further sends the first road side information to the first terminal device. The first road side information includes the traffic light information and the map information, and the traffic light information and the map information are used by the first terminal device to trigger generation of the V2I event.

Specifically, the second information received by the network device may further include the traffic light information. The traffic light information is information reported by the first device. The network device identifies that the traffic light information is information associated with the V2I event, and sends both the traffic light information and the map information to the first terminal device as the first road side information.

In embodiments of this application, that the network device tests the V2X function of the first terminal device based on the first information and the second information may be specifically testing a V2I function of the first terminal device. The network device verifies the V2I event based on the fourth motion information, the fifth motion information, the first road side information, and second road side information, to test the V2I function of the first terminal device.

The second road side information is road side information for triggering the V2I event.

Specifically, the network device determines, based on the fourth motion information, the fifth motion information, the first road side information, and the second road side information, whether the V2I event occurs; and
when determining that the V2I event occurs, the network device verifies that the V2I event is true; or
when determining that the V2I event does not occur, the network device verifies that the V2I event is false.

According to embodiments of this application, computing power and a storage capability of the network device are used, so that concurrently verifying a plurality of V2I events can be supported, to implement concurrent tests on the vehicle V2I function in a plurality of test areas. This greatly improves a vehicle test capability, and is applicable to a large-scale vehicle test scenario.

Optionally, in embodiments of this application, the network device may further verify authenticity of the fourth motion information and the first road side information, to improve authenticity of the fourth motion information and the first road side information.

Specifically, the network device verifies authenticity of the fourth motion information and the first road side information based on the V2I event, sixth motion information, and third road side information.

The sixth motion information is motion information that is from the first device and that is of a terminal device associated with the V2I event, and the third road side information is road side information that is from the first device and that is of the terminal device associated with the V2I event.

When the fourth motion information is the same as the sixth motion information, the network device determines that the fourth motion information is true; and
when the first road side information is the same as the third road side information, the network device determines that the first road side information is true; or
when the fourth motion information is different from the sixth motion information, the network device determines that the fourth motion information is false; and
when the first road side information is different from the third road side information, the network device determines that the first road side information is false.

According to embodiments of this application, authenticity of the fourth motion information is verified by using the sixth motion information, and authenticity of the first road side information is verified by using the third road side information, so that authenticity of the fourth motion information and the first road side information can be improved, to improve accuracy and reliability of verifying the V2I event.

It may be understood that, in the foregoing possible embodiments, technical features in different embodiments may be combined to form a new embodiment based on an internal logical relationship of the different embodiments. This is not limited in this application.

It can be learned from the foregoing plurality of possible embodiments that, when the V2X scenario is triggered, the first terminal device reports the first information associated with the V2X event to the network device, and the network device can identify, in time, a result reported by the first terminal device, and can reversely verify correctness of the first information more accurately based on the information for triggering the V2X scenario in the first information and the information about the first terminal device reported by the first device, to test the V2X function of the first terminal device. In embodiments of this application, the computing power and the storage capability of the network device are used, so that one test system can support concurrent tests in a plurality of test areas. This greatly improves the vehicle test capability, is applicable to the large-scale vehicle test scenario, and has diversified test scenarios.

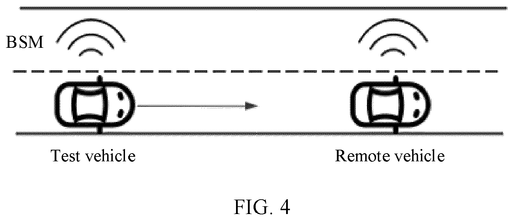

The following further describes the vehicle test method shown in FIG. 3 with reference to the V2X scenarios shown in FIG. 4 to FIG. 9.

FIG. 4 is a diagram of a V2V scenario according to an embodiment of this application.

FIG. 4 shows a V2V test scenario. The V2V scenario mainly includes a test vehicle and a remote vehicle. The remote vehicle cooperates with the test vehicle to complete a V2V function test in the V2V scenario. Specifically, both the test vehicle and the remote vehicle broadcast their BSM data at a fixed frequency.

It may be understood that the V2V event shown in FIG. 4 is a forward collision warning.

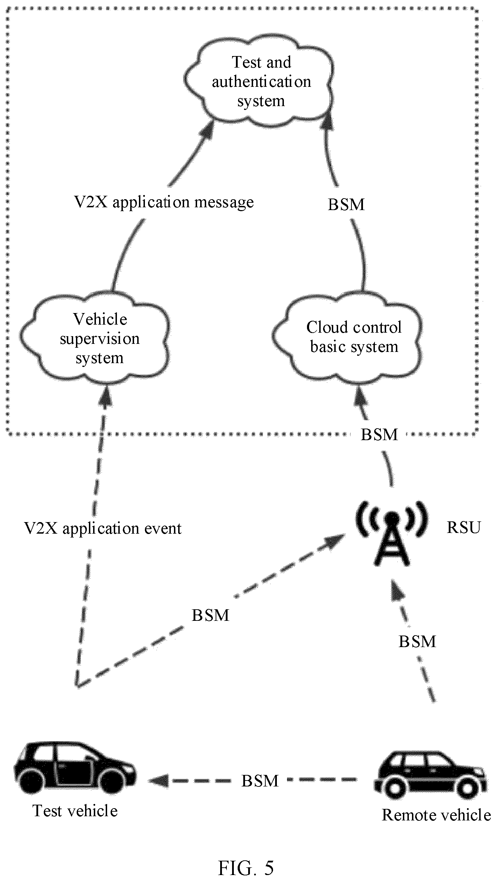

Specifically, for a main function test procedure in the V2V scenario, refer to FIG. 5. FIG. 5 is a diagram of a V2V function test according to an embodiment of this application.

As shown in FIG. 5, main steps of a V2V function test in a V2V scenario are as follows:
(1) Both a test vehicle and a remote vehicle broadcast their BSM data at a fixed frequency. The BSM data of the two vehicles is uploaded to a cloud control basic system through an RSU.
(2) The test vehicle receives the BSM data from the remote vehicle.
(3) When motion between the test vehicle and the remote vehicle meets a possible collision condition, the test vehicle is triggered to generate V2V collision warning information, namely, information about a V2V event. In this case, the V2V event is a forward collision warning.
(4) The test vehicle encapsulates the V2V collision warning information (namely, the information about the V2V event) and the collected BSM data of the remote vehicle into a V2X application message (which may be understood as the first information in FIG. 3), and uploads the V2X application message to a vehicle supervision system through a Uu interface.
(5) A test and authentication system receives the V2X application message sent by the vehicle supervision system.
(6) The test and authentication system parses the V2X application message to obtain the V2V collision warning information (namely, the information about the V2V event) and the BSM data of the remote vehicle collected by the test vehicle, and queries the cloud control basic system for the BSM data of the test vehicle obtained when the V2V event is generated.
(7) The test and authentication system analyzes the BSM data of the test vehicle obtained when the V2V event is generated and the BSM data of the remote vehicle in the V2X application message, reversely verifies whether the V2V event is true, and provides performance evaluation of the V2V function.

In embodiments of this application, motion information (BSM data) of the test vehicle and the remote vehicle is uploaded to the cloud control basic system. By using a storage capability of a cloud, the cloud control basic system may store BSM data reported by the test vehicle and the remote vehicle at each moment. When the test and authentication system receives the V2X application message, BSM data of the test vehicle at this moment can be queried in the cloud control basic system based on generation time of the V2V event.

In embodiments of this application, a motion relationship (for example, information such as a relative location, a relative speed, and a relative acceleration) between the test vehicle and the remote vehicle at a moment when the V2V scenario is generated can be restored as much as possible, so that a V2V function test of the test vehicle in the V2V scenario can be more scientifically and accurately evaluated, and a fraud behavior that the test vehicle uses some false data such as a historical V2X application message as a test result can be effectively prevented. In addition, test process data of the test vehicle can be persistently stored on the cloud, facilitating subsequent test result backtracking.

In addition, in embodiments of this application, when the test vehicle performs a test, a test process of the test vehicle may be further supervised by using the vehicle supervision system. Specifically, the following content may be included:
(1) Monitor a location of the test vehicle and filter out a test item that does not need to be completed in a specified test area.
(2) Record status data of the test vehicle, including data like an autonomous driving status, a vehicle-mounted V2X device status, a communication device status, a test mileage, and vehicle access information. In addition, the data can be persistently stored on the cloud and can be used as data support for a vehicle-road collaborative autonomous driving test.

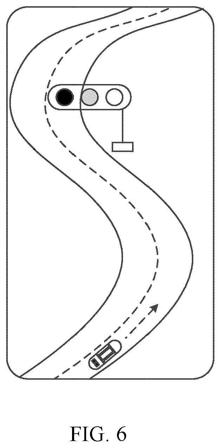

FIG. 6 is a diagram of a V2I scenario according to an embodiment of this application.

FIG. 6 shows a V2I test scenario. The V2I scenario mainly includes a test vehicle and a road side device. The road side device cooperates with the test vehicle to complete a V2I function test in the V2I scenario. Specifically, the test vehicle broadcasts BSM data of the test vehicle at a fixed frequency, and correspondingly, the road side device collects and reports the BSM data of the test vehicle. The road side device includes but is not limited to an edge sensor Edge and/or a signal controller.

It may be understood that a V2I event shown in FIG. 6 is a curve speed warning and a red light violation warning.

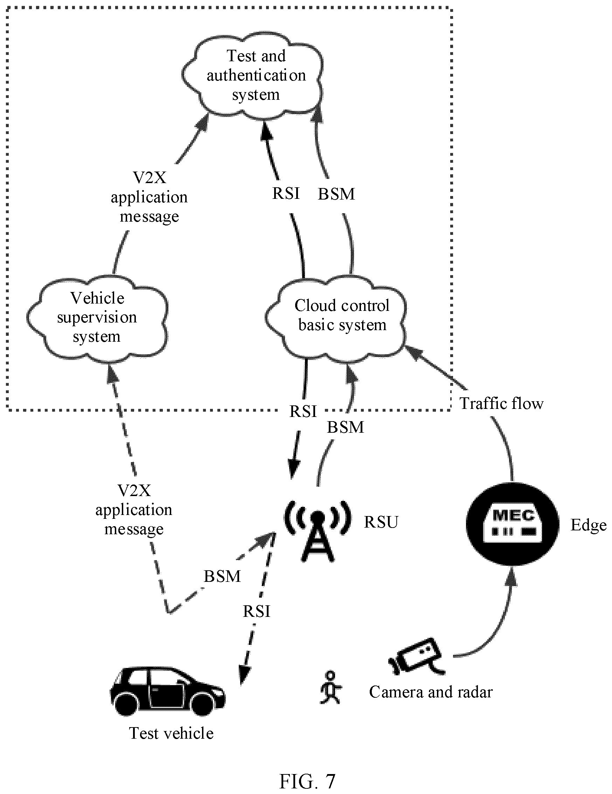

Specifically, for a main function test procedure in the V2I scenario, refer to FIG. 7. FIG. 7 is a diagram of a V2I function test according to an embodiment of this application.

As shown in FIG. 7, main steps of a V2I function test in a V2I scenario in which an edge sensor Edge participates are as follows:
(1) A test vehicle travels into a test area and uploads motion information (BSM data) of the test vehicle to a cloud control basic system through an RSU.
(2) An Edge device identifies a traffic participant through a mounted camera and/or radar, and uploads related traffic flow information to the cloud control basic system.
(3) The cloud control basic system identifies an RSI event in the test area by using an algorithm capability of the cloud control basic system, and delivers the RSI event to the test vehicle through the RSU device.
(4) The test vehicle receives the RSI event, determines, based on the RSI event and the BSM data of the test vehicle, to trigger a V2I event, and generates the V2I event. Then, the test vehicle encapsulates information about the RSI event, the BSM data of the test vehicle, and information about the V2I event into a corresponding V2X application message (which may be understood as the first information in FIG. 3), and uploads the V2X application message to a cloud (vehicle supervision system) through a Uu interface.
(5) The vehicle supervision system displays a location of an RSI event around the test vehicle and information about a traffic participant around the test vehicle in real time on a visible graphical interface.
(6) A test and authentication system receives the V2X application message sent by the vehicle supervision system, and parses out information such as original RSI information, the BSM data of the test vehicle, and the V2I event in the V2X application message.
(7) The test and authentication system queries the cloud control basic system for the RSI information and the BSM data that trigger the test vehicle to generate the V2X application message (V2I event).
(8) The test and authentication system separately performs verification based on the RSI and BSM on the cloud and the RSI and the BSM message of the vehicle in the V2X application message, to provide a function and performance test result of a V2I test item.
(9) The test vehicle completes the test of the current item.

In embodiments of this application, in a V2I application test scenario triggered by an RSI message, the cloud control basic system may integrate a plurality of RSI identification algorithms, and may dynamically generate a real RSI event in a test field. Compared with constructing an RSI event, this method is more reliable and can be used for a V2I scenario test on an open road. In this scenario of dynamically generating an RSI, a good anti-fraud effect can be achieved.

It may be understood that, in a V2I application test scenario triggered by an RSM message, the cloud control basic system may integrate a plurality of RSM identification algorithms, and may dynamically generate a real RSM event in the test field. A specific process is similar to the foregoing process of generating the RSI event, and details are not described herein again.

In addition, in embodiments of this application, for the V2I scenario test, the cloud has a better storage capability, and a test process can be more easily traced by using video playback on a user interface (user interface, UI) of the vehicle supervision system and a UI of the cloud control basic system.

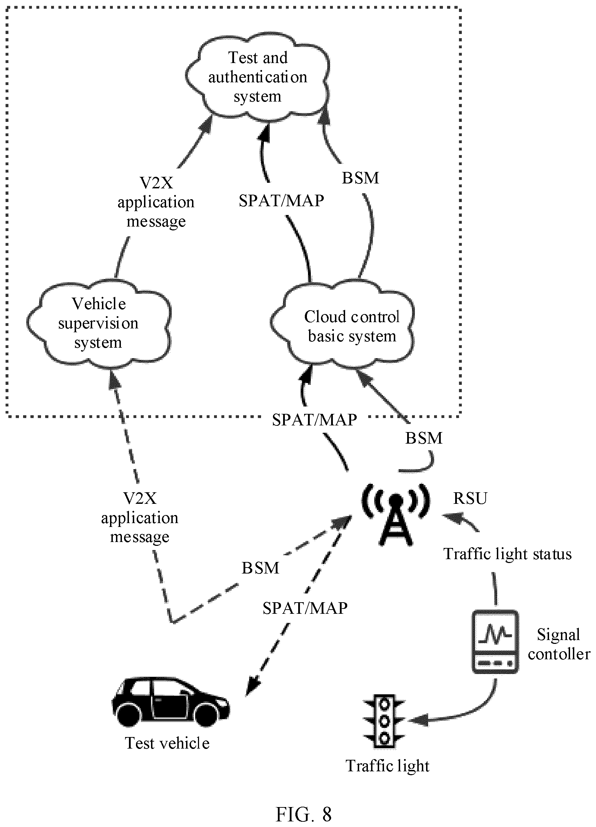

Specifically, for a main function test procedure in the V2I scenario shown in FIG. 6, refer to FIG. 8. FIG. 8 is a diagram of a V2I function test according to an embodiment of this application.

As shown in FIG. 8, main steps of a V2I function test in a V2I scenario in which a signal controller participates are as follows:
(1) A test vehicle travels into a test area and uploads motion information (BSM data) of the test vehicle to a cloud control basic system.
(2) A signal controller uploads a real-time phase of a traffic light in the test area to an RSU.
(3) The RSU uploads phase information of a traffic light around the test vehicle to the cloud control basic system and delivers the phase information of the traffic light around the test vehicle to the test vehicle in SPAT messages. After receiving the SPAT message, the cloud control basic system forwards a MAP message to the test vehicle through the RSU.

Optionally, step (3) may be replaced with the following implementation:

The RSU uploads the MAP message and the phase information of the traffic light around the test vehicle to the cloud control basic system in an SPAT message, and delivers the MAP message and the phase information of the traffic light around the test vehicle to the test vehicle in an SPAT message.
(4) The test vehicle receives the SPAT message and the MAP message. The test vehicle performs analyzing based on a location of the test vehicle to generate V2I events like vehicle speed guidance and a red light violation warning, and generates a V2X application message (which may be understood as the first information in FIG. 3). Specifically, the test vehicle encapsulates information about the V2I event, and the BSM, SPAT, and MAP messages into the V2X application message, and uploads the V2X application message to a cloud (vehicle supervision system).
(5) The vehicle supervision system dynamically displays a status of the traffic light around the vehicle on a visible graphical interface.
(6) A test and authentication system receives the V2X application message sent by the vehicle supervision system and parses out original BSM, MAP, and SPAT messages.
(7) The test and authentication system queries the cloud control basic system for the MAP, SPAT, and BSM messages that trigger the V2X application message (V2I event).
(8) The test and authentication system verifies authenticity of the V2X application message (namely, the V2I event) and evaluates performance based on the queried BSM, MAP, and SPAT messages and the original BSM, MAP, and SPAT messages in the V2X application message.
(9) The test vehicle completes the test of the current item.

In embodiments of this application, in a V2I application test scenario triggered by an SPAT, the cloud may deliver a high-definition map around the vehicle through a MAP message. The test vehicle can accurately identify a traffic light status of a current lane based on high-definition map information, so that the vehicle can accurately trigger information such as the red light violation warning.

In addition, in embodiments of this application, for the V2I scenario test, the cloud has a better storage capability, and a test process can be more easily traced by using video playback on a user interface (user interface, UI) of the vehicle supervision system and a UI of the cloud control basic system.

It may be understood that FIG. 4 to FIG. 8 merely provide examples of descriptions of the vehicle test method shown in FIG. 3 in several V2V scenarios and V2I scenarios. The vehicle test method in embodiments of this application may be further applied to various V2X scenarios other than those shown in FIG. 4 to FIG. 8, and should not constitute a limitation on a specific implementation and an application scope of the vehicle test method in embodiments of this application.

For example, the following further lists vehicle test methods in some V2X test scenarios in a form of a table. Details are shown in the following table.

**Table 3**

| Test item | Test scenario | Scenario presetting | Function test procedure | Performance test procedure | Remarks |
|---|---|---|---|---|---|
| Abnormal vehicle warning | There is an abnormal vehicle on a road section. | 1. An abnormal vehicle is preset on a road section X. | 1. A test vehicle travels to an entrance of the road section X, and a test case at a test pad point on the vehicle starts. | 1. The V2X test and authentication system receives first information reported by the vehicle at a start of a test to last information at an end of the test. | 1. A normal driving speed of the test vehicle is greater than 10 km/h and less than 70 km/h, and a slow driving speed is less than 10 km/h. |
| | | 2. The abnormal vehicle broadcasts abnormal vehicle warning information through PC5. | | | |
| | | | 2. The test vehicle starts to travel, and receives the front abnormal vehicle warning information, broadcast by the V2X RSU when approaching the preset abnormal vehicle. | | |
| | | | | 2. Record a location, a speed, and a reporting frequency of the vehicle based on data reported by the vehicle. | |
| | | | | | 2. A distance between the test vehicle and the abnormal vehicle is greater than 150 m. |
| | | 3. A road side unit RSU receives the abnormal vehicle warning information and reports the abnormal vehicle warning information to a V2X basic platform. | | | |
| | | | | 3. Compare the record with a preset performance requirement and output a performance comparison result. | |
| | | | 3. The test vehicle receives the abnormal vehicle warning information broadcast by the abnormal vehicle when approaching the preset abnormal vehicle. | | |
| | | | | | 3. The test vehicle reports a message at a frequency of 10 Hz. |
| | | | | | 4. The test vehicle receives a message at a frequency of 1 Hz. |
| | | 4. The V2X basic platform delivers the abnormal vehicle warning information to the RSU, and the RSU broadcasts the information. | | | |
| | | | 4. The test vehicle reports the received abnormal vehicle warning information. | | |
| | | | 5. The test vehicle travels away from the abnormal vehicle, and the test case at the test pad point on the vehicle ends. | | |
| | | | 6. A V2X test and authentication system performs comparison and analysis on data reported by the test vehicle and event data reported by the V2X basic platform, to generate a test result. | | |
| Vulnerable traffic participant warning | There is a pedestrian on a sidewalk. | 1. A dummy is preset on a sidewalk X. | 1. The test vehicle travels to the entrance of the road section X, and the test case at the test pad point on the vehicle starts. | Same as above | |
| | | 2. The dummy broadcasts abnormal vehicle warning information through the PC5. | | | |
| | | | 2. The test vehicle starts to travel, and receives the front abnormal vehicle warning information broadcast by the V2X when approaching the pedestrian. | | |
| | | 3. The road side unit RSU receives the warning information from the pedestrian and reports the information to the V2X basic platform. | | | |
| | | | 3. The test vehicle reports the received vulnerable traffic participant (pedestrian) warning information broadcast by the RSU. | | |
| | | 4. An edge computing unit senses the pedestrian through a camera, generates a vulnerable traffic participant (pedestrian) warning, and reports the warning to the V2X basic platform. | | | |
| | | 5. The V2X basic platform delivers the pedestrian warning information to the RSU, and the RSU broadcasts the information. | 4. The test vehicle travels away from the sidewalk, and the test case at the test pad point on the vehicle ends. | | |
| | | | 5. The V2X test and authentication system performs comparison and analysis on data reported by the test vehicle and event data reported by the V2X basic platform, to generate a test result. | | |
| Secondary accident warning | There is an accident in a lane. | 1. An accident vehicle is preset on the road section X. | 1. The test vehicle travels to the entrance of the road section X, and the test case at the test pad point on the vehicle starts. | Same as above | |
| | | 2. The accident vehicle broadcasts accident warning information through the PC5. | | | |
| | | | 2. The test vehicle starts to travel, and receives the front secondary accident warning information broadcast by the V2X when approaching the accident vehicle. | | |
| | | 3. The edge computing unit senses the faulty vehicle through the camera, generates a secondary accident warning, and reports the warning to the V2X basic platform. | | | |
| | | | 3. The test vehicle reports the received secondary accident warning information. | | |
| | | 4. The V2X basic platform delivers secondary accident warning information to the RSU, and the RSU broadcasts the information. | | | |
| | | | 4. The test vehicle travels away from the faulty vehicle, and the test case at the test pad point on the vehicle ends. | | |
| | | | 5. The V2X test and authentication system performs comparison and analysis on data reported by the test vehicle and event data reported by the V2X basic platform, to generate a test result. | | |
| Road construction warning | There is construction in a lane. | 1. Construction is preset in a lane on the road section X. | 1. The test vehicle travels to the entrance of the road section X, and the test case at the test pad point on the vehicle starts. | Same as above | |
| | | 2. The edge computing unit generates a road construction warning through camera sensing, and reports the warning to the V2X basic platform. | | | |
| | | | 2. The test vehicle starts to travel, and receives the road construction warning information broadcast by the V2X when approaching the road construction. | | |
| | | | | | |
| | | 3. The V2X basic platform delivers road construction warning information to the RSU, and the RSU broadcasts the information. | 3. The test vehicle reports the received road construction warning information. | | |
| | | | 4. The test vehicle travels away from the construction road, and then the test case at the test pad point on the vehicle ends. | | |
| | | | 5. The V2X test and authentication system performs comparison and analysis on data reported by the test vehicle and event data reported by the V2X basic platform, to generate a test result. | | |
| Congestion ahead warning | Multi-vehicle road congestion | 1. A congestion scenario is preset at the entrance of the road section X. | 1. The test vehicle travels to the entrance of the road section X, and the test case at the test pad point on the vehicle starts. | Same as above | |
| | | 2. The edge computing unit generates road congestion warning information through camera sensing, and reports the information to the V2X basic platform. | | | |
| | | | 2. The test vehicle starts to travel, and receives the road congestion warning information broadcast by the V2X when approaching the intersection. | | |
| | | | 3. The test vehicle reports the received road congestion warning information. | | |
| | | 3. The V2X basic platform delivers the road congestion warning information to the RSU, and the RSU broadcasts the information. | | | |
| | | | 4. The test vehicle travels away from the congested road, and then the test case at the test pad point on the vehicle ends. | | |
| | | | 5. The V2X test and authentication system performs comparison and analysis on data reported by the test vehicle and event data reported by the V2X basic platform, to generate a test result. | | |
| Dynamic variable speed limit warning | A road section requires a variable speed limit. | 1. Speed limit signs 40 and 60 are preset on the road section X. | 1. The test vehicle travels to the entrance of the road section X, and the test case at the test pad point on the vehicle starts. | Same as above | |
| | | 2. Map information is preset on a V2X basic platform. | | | |
| | | | 2. The test vehicle starts to travel, and receives the speed limit warning information broadcast by the V2X on the road section. | | |
| | | 3. The V2X basic platform delivers speed limit warning information to the RSU, and the RSU broadcasts the information. | | | |
| | | | 3. The test vehicle reports the received speed limit warning information and actual vehicle data (a speed and a location) obtained when the vehicle is traveling. | | |
| | | | 4. The test vehicle travels away from the speed limit road section, and then the test case at the test pad point on the vehicle ends. | | |
| | | | 5. The V2X test and authentication system performs comparison and analysis on data reported by the test vehicle and event data reported by the V2X basic platform, to generate a test result. | | |
| Dangerous road warning | Abrupt turn/Steep slope road section | 1. There is an abrupt turn or a steep slope on the road section X, and a sign is preset on a road side. | 1. The test vehicle travels to the entrance of the road section X, and the test case at the test pad point on the vehicle starts. | Same as above | |
| | | 2. Map information is preset on the V2X basic platform. 3. The V2X basic platform delivers dangerous road warning information to the RSU, and the RSU broadcasts the information. | | | |
| | | | 2. The test vehicle starts to travel, and receives the dangerous road section warning information broadcast by the V2X. | | |
| | | | 3. The test vehicle reports the received dangerous road section warning information and the actual vehicle data (the speed and the location) obtained when the vehicle is traveling. | | |
| | | | 4. The test vehicle travels away from the speed limit road section, and then the test case at the test pad point on the vehicle ends. | | |
| | | | 5. The V2X test and authentication system performs comparison and analysis on data reported by the test vehicle and event data reported by the V2X basic platform, to generate a test result. | | |
| Forward collision warning | Closely approach a front vehicle | 1. A tested vehicle is preset on the road section X. | 1. The test vehicle travels to the entrance of the road section X, and the test case at the test pad point on the vehicle starts. | Same as above | |
| | | 2. The tested vehicle reports vehicle information (location). | | | |
| | | | 2. The test vehicle starts to travel and slowly approaches the tested vehicle. | | |
| | | 3. The edge computing unit generates a collision warning through camera sensing, and reports the warning to the V2X basic platform. | | | |
| | | | 3. The test vehicle broadcasts forward collision warning information and reports the received collision warning information and the actual vehicle data (the speed and the location) obtained when the vehicle is traveling. | | |
| | | | 4. The preset tested vehicle receives the collision warning information and broadcasts the information. | | |
| | | | 5. The test vehicle travels away from the preset tested vehicle, and then the test case at the test pad point on the vehicle ends. | | |
| | | | 6. The V2X test and authentication system performs comparison and analysis on data reported by the test vehicle and event data reported by the V2X basic platform, to generate a test result. | | |
| Emergency braking warning | Emergency braking of the front vehicle | 1. The tested vehicle is preset on the road section X. | 1. The test vehicle travels to the entrance of the road section X, and the test case at the test pad point on the vehicle starts. | Same as above | |
| | | 2. The tested vehicle broadcasts emergency braking information. | | | |
| | | | 2. The test vehicle starts to travel and approaches the preset tested vehicle. | | |
| | | 3. The V2X basic platform receives the information from the preset tested vehicle. | | | |
| | | | 3. The test vehicle broadcasts received emergency braking warning information of the preset tested vehicle, and reports the received collision warning information and the actual vehicle data (the speed and the location) obtained when the vehicle is traveling. | | |
| | | | 4. The test vehicle travels away from the preset tested vehicle, and then the test case at the test pad point on the vehicle ends. | | |
| | | | 5. The V2X test and authentication system performs comparison and analysis on data reported by the test vehicle and event data reported by the V2X basic platform, to generate a test result. | | |
| Traffic light push warning | Intersection traffic light | 1. A traffic light is preset at the entrance of the road section X. | 1. The test vehicle travels to the entrance of the road section X, and the test case at the test pad point on the vehicle starts. | Same as above | |
| | | 2. A signal controller reports traffic light information to the V2X basic platform. | | | |
| | | | 2. The test vehicle starts to travel and approaches the traffic light intersection. | | |
| | | 3. The V2X delivers traffic light push warning information of the entrance of the road section X to the RSU. | | | |
| | | | 3. The test vehicle receives broadcast traffic light warning information, and reports the received traffic light warning information and the actual vehicle data (the speed and the location) obtained when the vehicle is traveling. | | |
| | | | 4. The test vehicle travels away from the traffic light intersection, and then the test case at the test pad point on the vehicle ends. | | |
| | | | 5. The V2X test and authentication system performs comparison and analysis on data reported by the test vehicle and event data reported by the V2X basic platform, to generate a test result. | | |
| Exclusive road management warning | Bus lane | 1. An exclusive lane (bus lane) is provided on the road section X. | 1. The test vehicle travels to the entrance of the road section X, and the test case at the test pad point on the vehicle starts. | Same as above | |
| | | 2. The map information is preset on the V2X basic platform. | | | |
| | | | 2. The test vehicle receives the exclusive road management warning information broadcast by the RSU, and reports the received exclusive road management warning information and the actual vehicle data (the speed and the location) obtained when the vehicle is traveling. | | |
| | | 3. The V2X delivers exclusive road management warning information to the RSU on the road section X. | | | |
| | | | 4. The test vehicle travels away from the exclusive road section, and then the test case at the test pad point on the vehicle ends. | | |
| | | | 5. The V2X test and authentication system performs comparison and analysis on data reported by the test vehicle and event data reported by the V2X basic platform, to generate a test result. | | |
| Access restriction warning | Regulated road | 1. A regulated lane is provided on the road section X. | 1. The test vehicle travels to the entrance of the road section X, and the test case at the test pad point on the vehicle starts. | Same as above | |
| | | 2. An access restriction warning event is set on the V2X basic platform. | | | |
| | | | 2. The test vehicle receives the access restriction warning information broadcast by the RSU, and reports the received exclusive road management warning information and the actual vehicle data (the speed and the location) obtained when the vehicle is traveling. | | |
| | | 3. The V2X delivers lane access restriction warning information to the RSU on the road section X. | | | |
| | | | 4. The test vehicle travels away from the regulated road section, and then the test case at the test pad point on the vehicle ends. | | |
| | | | 5. The V2X test and authentication system performs comparison and analysis on data reported by the test vehicle and event data reported by the V2X basic platform, to generate a test result. | | |

In addition, the V2X application message (namely, the first information in FIG. 3) defined in embodiments of this application may be further used to supervise an intelligent connected vehicle.

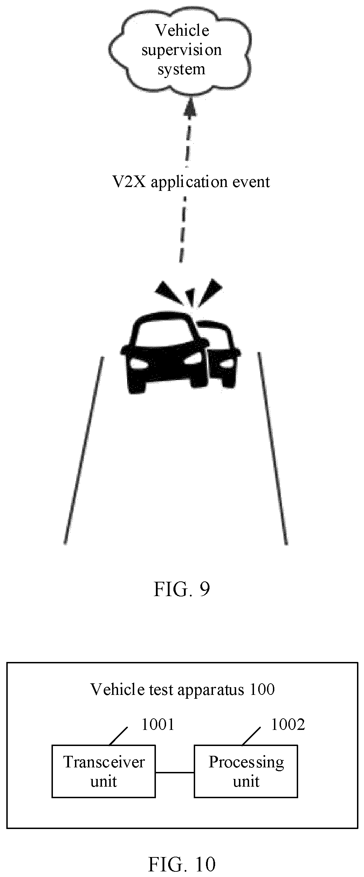

For details, refer to FIG. 9. FIG. 9 is a diagram of a vehicle supervision scenario according to an embodiment of this application.

As shown in FIG. 9, a V2X application scenario is applicable to assisted driving of a vehicle and autonomous driving of the vehicle, to help the vehicle perform some auxiliary control. Specifically, the V2X application message in embodiments of this application may be used to supervise an autonomous driving vehicle. A specific implementation method is as follows:
(1) The autonomous driving vehicle is connected to a vehicle supervision platform.
(2) The autonomous driving vehicle encapsulates an identified V2X scenario into a V2X application message, and uploads the V2X application message to the vehicle supervision platform through a Uu interface of the vehicle (as shown in FIG. 9). The vehicle uploads a BSM of the vehicle, a status of a head unit (including but not limited to information such as an autonomous driving status, steering, braking, a mileage, and a gear), alarm data, and the like to the vehicle supervision system through the Uu interface.
(3) When an accident occurs on the vehicle, a vehicle supervision department and an autonomous driving manufacturer can view information such as the V2X application message from the supervision system to help define the accident liability or help the vehicle manufacturer improve an autonomous driving algorithm.

In embodiments of this application, the V2X application message is used to both a V2X scenario test of an intelligent connected vehicle and supervision after the vehicle is put into commercial use, and is more easily received by the vehicle manufacturer. For the supervision department, it is easier to define the accident liability between the intelligent connected vehicle and another vehicle. In addition, the V2X application message is uploaded to the supervision platform through the Uu interface, and is not restricted by construction of a V2X infrastructure like an RSU.

The foregoing describes in detail the methods in embodiments of this application. The following provides an apparatus for implementing any method in embodiments of this application. For example, an apparatus is provided, and includes units (or means) configured to implement steps performed by a network element/device in any one of the foregoing methods.

FIG. 10 is a diagram of a structure of a vehicle test apparatus according to an embodiment of this application.

As shown in FIG. 10, the vehicle test apparatus 100 may include a transceiver unit 1001 and a processing unit 1002. The transceiver unit 1001 and the processing unit 1002 may be software, hardware, or a combination of software and hardware.

The transceiver unit 1001 may implement a sending function and/or a receiving function, and the transceiver unit 1001 may also be described as a communication unit. The transceiver unit 1001 may alternatively be a unit integrating an obtaining unit and a sending unit. The obtaining unit is configured to implement a receiving function, and the sending unit is configured to implement a sending function. Optionally, the transceiver unit 1001 may be configured to receive information sent by another apparatus, and may be further configured to send information to the another apparatus.

In a possible design, the vehicle test apparatus 100 may correspond to the network device in the method embodiment shown in FIG. 3. For example, the vehicle test apparatus 100 may be a network device, or may be a chip in the network device. The vehicle test apparatus 100 may include units configured to perform operations performed by the network device in the method embodiment shown in FIG. 3. In addition, the units in the vehicle test apparatus 100 are separately configured to implement the operations performed by the network device in the method embodiment shown in FIG. 3. The units are described as follows.

The transceiver unit 1001 is configured to receive first information sent by a first terminal device. The first information includes information about a vehicle-to-everything V2X event associated with the first terminal device.

The transceiver unit 1001 is further configured to receive second information sent by a first device. The first device is a device different from the first terminal device, and the second information includes information about the first terminal device obtained by the first device.

The processing unit 1002 is configured to test a V2X function of the first terminal device based on the first information and the second information.

In a possible implementation, the first information includes information about a vehicle-to-vehicle V2V event associated with the first terminal device and/or information about a vehicle-to-infrastructure V2I event associated with the first terminal device.

In a possible implementation, when the first information includes the information about the vehicle-to-vehicle V2V event associated with the first terminal device, the first information further includes first motion information of a second terminal device.

The processing unit 1002 is further configured to test a V2V function of the first terminal device based on the first information and the second information.

In a possible implementation, the second information includes second motion information of the first terminal device obtained by the first device, and the second motion information is motion information for triggering the V2V event.

The processing unit 1002 is further configured to verify the V2V event based on the first motion information and the second motion information.

In a possible implementation, the processing unit 1002 is further configured to: determine, based on the first motion information and the second motion information, whether the V2V event occurs; and
when it is determined that the V2V event occurs, verify that the V2V event is true; or
when it is determined that the V2V event does not occur, verify that the V2V event is false.

In a possible implementation, the processing unit 1002 is further configured to verify authenticity of the first motion information based on the V2V event and third motion information.

The third motion information is motion information that is from the first device and that is of a terminal device associated with the V2V event.

In a possible implementation, the processing unit 1002 is further configured to: when the first motion information is the same as the third motion information, determine that the first motion information is true; or
the processing unit 1002 is further configured to: when the first motion information is different from the third motion information, determine that the first motion information is false.

In a possible implementation, when the first information includes the information about the vehicle-to-infrastructure V2I event associated with the first terminal device, the first information further includes fourth motion information of the first terminal device and first road side information of a road on which the first terminal device is located.

The processing unit 1002 is further configured to test a V2I function of the first terminal device based on the first information and the second information.

In a possible implementation, the first road side information includes information about a first road side event, and the first road side event is a road side event associated with the V2I event; or
the first road side information includes traffic light information and map information, and the traffic light information is information associated with the V2I event.

In a possible implementation, the second information includes fifth motion information of the first terminal device obtained by the first device, and the fifth motion information is motion information for triggering the V2I event.

The processing unit 1002 is further configured to verify the V2I event based on the fourth motion information, the fifth motion information, the first road side information, and second road side information, where the second road side information is road side information for triggering the V2I event.

In a possible implementation, the second information further includes at least one of traffic flow information, the traffic light information, and the map information.

The transceiver unit 1001 is further configured to send the first road side information to the first terminal device, where the first road side information includes at least one of the information about the first road side event, the traffic light information, and the map information.

In a possible implementation, the processing unit 1002 is further configured to: determine, based on the fourth motion information, the fifth motion information, the first road side information, and the second road side information, whether the V2I event occurs; and
when it is determined that the V2I event occurs, verify that the V2I event is true; or
when it is determined that the V2I event does not occur, verify that the V2I event is false.

In a possible implementation, the processing unit 1002 is further configured to verify authenticity of the fourth motion information and the first road side information based on the V2I event, sixth motion information, and third road side information.

The sixth motion information is motion information that is from the first device and that is of a terminal device associated with the V2I event, and the third road side information is road side information that is from the first device and that is of the terminal device associated with the V2I event.

In a possible implementation, the processing unit 1002 is further configured to: when the fourth motion information is the same as the sixth motion information, determine that the fourth motion information is true; and
the processing unit 1002 is further configured to: when the first road side information is the same as the third road side information, determine that the first road side information is true; or
the processing unit 1002 is further configured to: when the fourth motion information is different from the sixth motion information, determine that the fourth motion information is false; and
the processing unit 1002 is further configured to: when the first road side information is different from the third road side information, determine that the first road side information is false.

In another possible design, the vehicle test apparatus 100 may correspond to the first terminal device in the method embodiment shown in FIG. 3. For example, the vehicle test apparatus 100 may be the first terminal device, or may be a chip in the first terminal device. The vehicle test apparatus 100 may include units configured to perform the operations performed by the first terminal device in the method embodiment shown in FIG. 3. In addition, the units in the vehicle test apparatus 100 are separately configured to implement the operations performed by the first terminal device in the method embodiment shown in FIG. 3. The units are described as follows.

The transceiver unit 1001 is configured to send first information to a network device, where the first information includes information about a vehicle-to-everything V2X event associated with the vehicle test apparatus.

The transceiver unit 1001 is further configured to send information about the vehicle test apparatus to a first device, where the first device is a device different from the vehicle test apparatus.

The first information and the information about the vehicle test apparatus are used to test a V2X function of the vehicle test apparatus.

In a possible implementation, the first information includes information about a vehicle-to-vehicle V2V event associated with the vehicle test apparatus, and/or information about a vehicle-to-infrastructure V2I event associated with the vehicle test apparatus.

In a possible implementation, when the first information includes the information about the vehicle-to-vehicle V2V event associated with the vehicle test apparatus, the first information further includes first motion information of a second terminal device.

The first information and the information about the vehicle test apparatus are used to test a V2V function of the vehicle test apparatus.

In a possible implementation, the information about the vehicle test apparatus includes second motion information of the vehicle test apparatus, and the second motion information is motion information for triggering the V2V event.

The first motion information and the second motion information are used to test the V2V function of the vehicle test apparatus.

In a possible implementation, when the first information includes the information about the vehicle-to-infrastructure V2I event associated with the vehicle test apparatus, the first information further includes fourth motion information of the vehicle test apparatus and first road side information of a road on which the vehicle test apparatus is located.

The first information and the information about the vehicle test apparatus are used to test a V2I function of the vehicle test apparatus.

In a possible implementation, the first road side information includes information about a first road side event, and the first road side event is a road side event associated with the V2I event; or
the first road side information includes traffic light information and map information, and the traffic light information is information associated with the V2I event.

In a possible implementation, the information about the vehicle test apparatus includes fifth motion information of the vehicle test apparatus, and the fifth motion information is motion information for triggering the V2I event.

The fourth motion information, the fifth motion information, the first road side information, and second road side information are used to test the V2I function of the vehicle test apparatus, and the second road side information is road side information for triggering the V2I event.

In a possible implementation, the transceiver unit 1001 is further configured to receive the first road side information sent by the network device, and the first road side information includes at least one of the information about the first road side event, the traffic light information, and the map information.

According to this embodiment of this application, the units in the apparatus shown in FIG. 10 may be separately or all combined into one or more other units, or one or more units in the apparatus may be further split into a plurality of units with more detailed functions. This can implement a same operation without affecting implementation of technical effects of this embodiment of this application. The foregoing units are obtained through division based on logical functions. During actual application, a function of one unit may alternatively be implemented by a plurality of units, or functions of a plurality of units are implemented by one unit. In other embodiments of this application, an electronic device may further include other units. During actual application, the functions may alternatively be implemented with assistance of the other units, and may be implemented by a plurality of units in collaboration.

It should be noted that, for implementations of the units, refer to corresponding descriptions of the method embodiment shown in FIG. 3.

In the vehicle test apparatus 100 described in FIG. 10, the network device can identify, in time, the first information that is reported by the first terminal device and that is associated with the V2X event when the V2X scenario is triggered, and can reversely verify correctness of the first information more accurately based on the information for triggering the V2X scenario in the first information and the information about the first terminal device reported by the first device, to test the V2X function of the first terminal device. In addition, computing power and a storage capability of the network device are used, so that one test system can support concurrent tests in a plurality of test areas. This greatly improves a vehicle test capability, is applicable to a large-scale vehicle test scenario, and has diversified test scenarios.

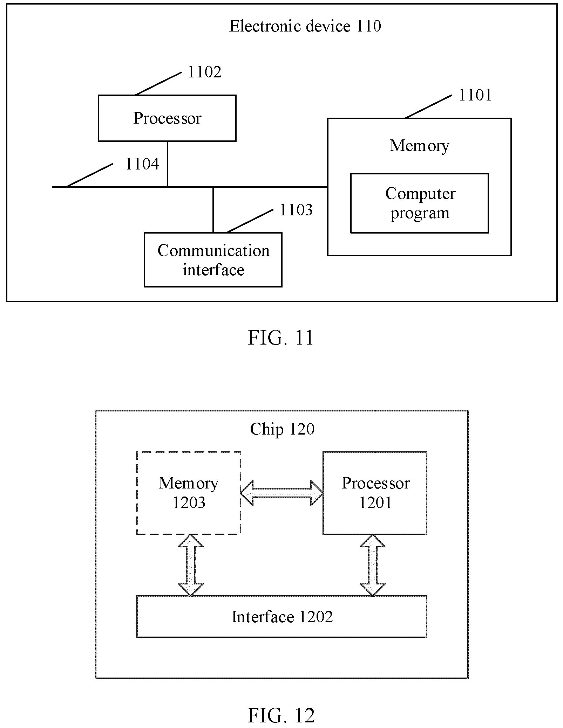

FIG. 11 is a diagram of a structure of an electronic device 110 according to an embodiment of this application. The electronic device 110 may include a memory 1101 and a processor 1102. Further, optionally, a communication interface 1103 and a bus 1104 may be included. The memory 1101, the processor 1102, and the communication interface 1103 are communicatively connected to each other through the bus 1104. The communication interface 1103 is configured to exchange data with the vehicle test apparatus 100.

The memory 1101 is configured to provide storage space, and the storage space may store data such as an operating system and a computer program. The memory 1101 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

The processor 1102 is a module that performs an arithmetic operation and a logical operation, and may be one or a combination of processing modules such as a central processing unit (central processing unit, CPU), a graphics processing unit (graphics processing unit, GPU), or a microprocessor unit (microprocessor unit, MPU).

In a possible design, the electronic device 110 may correspond to the network device in the method embodiment shown in FIG. 3. For example, the electronic device 110 may be the network device, or may be a chip in the network device. The electronic device 110 may include components configured to perform the operations performed by the network device in the foregoing method embodiments. In addition, the components in the electronic device 110 are separately configured to implement the operations performed by the network device in the foregoing method embodiments. The processor 1102 invokes the computer program stored in the memory 1101, to perform the vehicle test method shown in FIG. 3. Details may be as follows.

A network device receives first information sent by a first terminal device, where the first information includes information about a vehicle-to-everything V2X event associated with the first terminal device.

The network device receives second information sent by a first device, where the first device is a device different from the first terminal device, and the second information includes information about the first terminal device obtained by the first device.

The network device tests a V2X function of the first terminal device based on the first information and the second information.

In a possible implementation, the first information includes information about a vehicle-to-vehicle V2V event associated with the first terminal device and/or information about a vehicle-to-infrastructure V2I event associated with the first terminal device.

In a possible implementation, when the first information includes the information about the vehicle-to-vehicle V2V event associated with the first terminal device, the first information further includes first motion information of a second terminal device.

That the network device tests a V2X function of the first terminal device based on the first information and the second information includes:

The network device tests a V2V function of the first terminal device based on the first information and the second information.

In a possible implementation, the second information includes second motion information of the first terminal device obtained by the first device, and the second motion information is motion information for triggering the V2V event.

That the network device tests a V2V function of the first terminal device based on the first information and the second information includes:

The network device verifies the V2V event based on the first motion information and the second motion information.

In a possible implementation, the method further includes:
determining the second motion information in the second information based on the V2V event.

In a possible implementation, the determining the second motion information in the second information based on the V2V event includes:
determining, in the second information based on a timestamp of the V2V event, motion information obtained when the V2V event occurs as the second motion information.

In a possible implementation, that the network device verifies the V2V event based on the first motion information and the second motion information includes:
determining, based on the first motion information and the second motion information, whether the V2V event occurs; and
when it is determined that the V2V event occurs, verifying that the V2V event is true; or
when it is determined that the V2V event does not occur, verifying that the V2V event is false.

In a possible implementation, the method further includes:
verifying authenticity of the first motion information based on the V2V event and third motion information.

The third motion information is motion information that is from the first device and that is of a terminal device associated with the V2V event.

In a possible implementation, the verifying authenticity of the first motion information based on the V2V event and third motion information includes:
when the first motion information is the same as the third motion information, determining that the first motion information is true; or
when the first motion information is different from the third motion information, determining that the first motion information is false.

In a possible implementation, when the first information includes the information about the vehicle-to-infrastructure V2I event associated with the first terminal device, the first information further includes fourth motion information of the first terminal device and first road side information of a road on which the first terminal device is located.

That the network device tests a V2X function of the first terminal device based on the first information and the second information includes:
The network device tests a V2I function of the first terminal device based on the first information and the second information.

In a possible implementation, the first road side information includes information about a first road side event, and the first road side event is a road side event associated with the V2I event; or
the first road side information includes traffic light information and map information, and the traffic light information is information associated with the V2I event.

In a possible implementation, the second information includes fifth motion information of the first terminal device obtained by the first device, and the fifth motion information is motion information for triggering the V2I event.

That the network device tests a V2I function of the first terminal device based on the first information and the second information includes:

The network device verifies the V2I event based on the fourth motion information, the fifth motion information, the first road side information, and second road side information, where the second road side information is road side information for triggering the V2I event.

In a possible implementation, the method further includes:
determining the fifth motion information in the second information based on the V2I event.

In a possible implementation, the determining the fifth motion information in the second information based on the V2I event includes:
determining, in the second information based on a timestamp of the V2I event, motion information obtained when the V2I event occurs as the fifth motion information.

In a possible implementation, the second information further includes at least one of traffic flow information, the traffic light information, and the map information, and the method further includes:

The network device sends the first road side information to the first terminal device, where the first road side information includes at least one of the information about the first road side event, the traffic light information, and the map information.

In a possible implementation, that the network device verifies the V2I event based on the fourth motion information, the fifth motion information, the first road side information, and second road side information includes:
determining, based on the fourth motion information, the fifth motion information, the first road side information, and the second road side information, whether the V2I event occurs; and
when it is determined that the V2I event occurs, verifying that the V2I event is true; or
when it is determined that the V2I event does not occur, verifying that the V2I event is false.

In a possible implementation, the method further includes:
verifying authenticity of the fourth motion information and the first road side information based on the V2I event, sixth motion information, and third road side information.

The sixth motion information is motion information that is from the first device and that is of a terminal device associated with the V2I event, and the third road side information is road side information that is from the first device and that is of the terminal device associated with the V2I event.

In a possible implementation, the verifying authenticity of the fourth motion information and the first road side information based on the V2I event, sixth motion information, and third road side information includes:
when the fourth motion information is the same as the sixth motion information, determining that the fourth motion information is true; and
when the first road side information is the same as the third road side information, determining that the first road side information is true; or
when the fourth motion information is different from the sixth motion information, determining that the fourth motion information is false; and
when the first road side information is different from the third road side information, determining that the first road side information is false.

For specific content of the method performed by the processor 1102, refer to FIG. 3. Details are not described herein again.

Correspondingly, the processor 1102 invokes the computer program stored in the memory 1101, and may be further configured to perform the method steps performed by the units in the vehicle test apparatus 100 shown in FIG. 10. For specific content, refer to FIG. 10. Details are not described herein again.

In another possible design, the electronic device 110 may correspond to the first terminal device in the method embodiment shown in FIG. 3. For example, the electronic device 110 may be the first terminal device, or may be a chip in the first terminal device. The electronic device 110 may include components configured to perform the operations performed by the first terminal device in the method embodiments. In addition, the components in the electronic device 110 are separately configured to implement the operations performed by the first terminal device in the foregoing method embodiments. The processor 1102 invokes the computer program stored in the memory 1101, to perform the vehicle test method shown in FIG. 3. Details may be as follows.

A first terminal device sends first information to a network device, where the first information includes information about a vehicle-to-everything V2X event associated with the first terminal device.

The first terminal device sends information about the first terminal device to a first device, where the first device is a device different from the first terminal device.

The first information and the information about the first terminal device are used to test a V2X function of the first terminal device.

In a possible implementation, the first information includes information about a vehicle-to-vehicle V2V event associated with the first terminal device and/or information about a vehicle-to-infrastructure V2I event associated with the first terminal device.

In a possible implementation, when the first information includes the information about the vehicle-to-vehicle V2V event associated with the first terminal device, the first information further includes first motion information of a second terminal device.

The first information and the information about the first terminal device are used to test a V2V function of the first terminal device.

In a possible implementation, the information about the first terminal device includes second motion information of the first terminal device, and the second motion information is motion information for triggering the V2V event.

The first motion information and the second motion information are used to test the V2V function of the first terminal device.

In a possible implementation, when the first information includes the information about the vehicle-to-infrastructure V2I event associated with the first terminal device, the first information further includes fourth motion information of the first terminal device and first road side information of a road on which the first terminal device is located.

The first information and the information about the first terminal device are used to test a V2I function of the first terminal device.

In a possible implementation, the first road side information includes information about a first road side event, and the first road side event is a road side event associated with the V2I event; or
the first road side information includes traffic light information and map information, and the traffic light information is information associated with the V2I event.

In a possible implementation, the information about the first terminal device includes fifth motion information of the first terminal device, and the fifth motion information is motion information for triggering the V2I event.

The fourth motion information, the fifth motion information, the first road side information, and second road side information are used to test the V2I function of the first terminal device, and the second road side information is road side information for triggering the V2I event.

In a possible implementation, the method further includes:
The first terminal device receives the first road side information sent by the network device, where the first road side information includes at least one of the information about the first road side event, the traffic light information, and the map information.

For specific content of the method performed by the processor 1102, refer to FIG. 3. Details are not described herein again.

Correspondingly, the processor 1102 invokes the computer program stored in the memory 1101, and may be further configured to perform the method steps performed by the units in the vehicle test apparatus 100 shown in FIG. 10. For specific content, refer to FIG. 10. Details are not described herein again.

In the electronic device 110 described in FIG. 11, the network device can identify, in time, the first information that is reported by the first terminal device and that is associated with the V2X event when the V2X scenario is triggered, and can reversely verify correctness of the first information more accurately based on the information for triggering the V2X scenario in the first information and the information about the first terminal device reported by the first device, to test the V2X function of the first terminal device. In addition, computing power and a storage capability of the network device are used, so that one test system can support concurrent tests in a plurality of test areas. This greatly improves a vehicle test capability, is applicable to a large-scale vehicle test scenario, and has diversified test scenarios.

For a case in which the electronic device may be a chip or a chip system, refer to a diagram of a structure of a chip shown in FIG. 12.

As shown in FIG. 12, the chip 120 includes a processor 1201 and an interface 1202. There may be one or more processors 1201, and there may be a plurality of interfaces 1202. It should be noted that corresponding functions of the processor 1201 and the interface 1202 can be implemented by using a hardware design, or can be implemented by using a software design, or can be implemented by a combination of software and hardware, which is not limited herein.

Optionally, the chip 120 may further include a memory 1203, and the memory 1203 is configured to store necessary program instructions and data.

In this application, the processor 1201 may be configured to: invoke, from the memory 1203, a program for implementing the vehicle test method provided in one or more embodiments of this application on the electronic device, and execute instructions included in the program. The interface 1202 may be configured to output an execution result of the processor 1201. In this application, the interface 1202 may be specifically configured to output messages or information of the processor 1201.

For the vehicle test method provided in one or more embodiments of this application, refer to embodiments shown in FIG. 3. Details are not described herein again.

The processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or transistor logic device, a discrete hardware component, or the like. The general-purpose processor may be a microprocessor, or the processor may be any conventional processor or the like.

The memory in embodiments of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

According to the method provided in embodiments of this application, an embodiment of this application further provides a computer-readable storage medium. The computer-readable storage medium stores a computer program. When the computer program is run on one or more processors, the method shown in FIG. 3 may be implemented.

According to the method provided in embodiments of this application, an embodiment of this application further provides a computer program product. The computer program product includes a computer program. When the computer program is run on a processor, the method shown in FIG. 3 may be implemented.

An embodiment of this application provides a vehicle end. The vehicle end includes at least one vehicle test apparatus 100, the electronic device 110, or the chip 120.

An embodiment of this application further provides a system. The system includes a vehicle end and at least one of the vehicle test apparatus 100, the electronic device 110, or the chip 120, configured to perform steps performed by a corresponding device in any one of embodiments in FIG. 3.

An embodiment of this application further provides a system. The system includes a network device and a first terminal device. The network device is configured to perform the steps performed by the network device in any one of embodiments in FIG. 3, and the first terminal device is configured to perform the steps performed by the first terminal device in any one of embodiments in FIG. 3.

An embodiment of this application further provides a processing apparatus, including a processor and an interface. The processor is configured to perform the method in any one of the foregoing method embodiments.

It should be understood that the processing apparatus may be a chip. For example, the processing apparatus may be a field programmable gate array (field programmable gate array, FPGA), may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component, may be a system on chip (system on chip, SoC), may be a central processor unit (central processor unit, CPU), may be a network processor (network processor, NP), may be a digital signal processor (digital signal processor, DSP), may be a micro controller unit (micro controller unit, MCU), and may be a programmable logic device (programmable logic device, PLD) or another integrated chip. The processing apparatus may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another proper type.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state disc (solid state disc, SSD)), or the like.

The units in the foregoing apparatus embodiments exactly correspond to an electronic device in the method embodiments, and corresponding modules or units perform corresponding steps. For example, a communication unit (transceiver) performs a receiving or sending step in the method embodiments, and steps other than sending and receiving may be performed by a processing unit (processor). For a function of a specific unit, refer to a corresponding method embodiment. There may be one or more processors.

It may be understood that in embodiments of this application, the electronic device may perform a part of or all steps in embodiments of this application. These steps or operations are merely examples. In embodiments of this application, other operations or variations of various operations may be performed. In addition, the steps may be performed in a sequence different from a sequence presented in embodiments of this application, and not all the operations in embodiments of this application may be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A vehicle test method, comprising:
receiving, by a network device, first information sent by a first terminal device, wherein the first information comprises information about a vehicle-to-everything V2X event associated with the first terminal device;
receiving, by the network device, second information sent by a first device, wherein the first device is a device different from the first terminal device, and the second information comprises information about the first terminal device obtained by the first device; and
testing, by the network device, a V2X function of the first terminal device based on the first information and the second information.

2. The method according to claim 1, wherein the first information comprises information about a vehicle-to-vehicle V2V event associated with the first terminal device and/or information about a vehicle-to-infrastructure V2I event associated with the first terminal device.

3. The method according to claim 2, wherein when the first information comprises the information about the vehicle-to-vehicle V2V event associated with the first terminal device, the first information further comprises first motion information of a second terminal device; and
the testing, by the network device, a V2X function of the first terminal device based on the first information and the second information comprises:
testing, by the network device, a V2V function of the first terminal device based on the first information and the second information.

4. The method according to claim 3, wherein the second information comprises second motion information of the first terminal device obtained by the first device, and the second motion information is motion information for triggering the V2V event; and
the testing, by the network device, a V2V function of the first terminal device based on the first information and the second information comprises:
verifying, by the network device, the V2V event based on the first motion information and the second motion information.

5. The method according to claim 4, wherein the verifying, by the network device, the V2V event based on the first motion information and the second motion information comprises:
determining, based on the first motion information and the second motion information, whether the V2V event occurs; and
when it is determined that the V2V event occurs, verifying that the V2V event is true; or
when it is determined that the V2V event does not occur, verifying that the V2V event is false.

6. The method according to claim 4 or 5, wherein the method further comprises:
verifying authenticity of the first motion information based on the V2V event and third motion information, wherein
the third motion information is motion information that is from the first device and that is of a terminal device associated with the V2V event.

7. The method according to claim 6, wherein the verifying authenticity of the first motion information based on the V2V event and third motion information comprises:
when the first motion information is the same as the third motion information, determining that the first motion information is true; or
when the first motion information is different from the third motion information, determining that the first motion information is false.

8. The method according to claim 2, wherein when the first information comprises the information about the vehicle-to-infrastructure V2I event associated with the first terminal device, the first information further comprises fourth motion information of the first terminal device and first road side information of a road on which the first terminal device is located; and
the testing, by the network device, a V2X function of the first terminal device based on the first information and the second information comprises:
testing, by the network device, a V2I function of the first terminal device based on the first information and the second information.

9. The method according to claim 8, wherein the first road side information comprises information about a first road side event, and the first road side event is a road side event associated with the V2I event; or
the first road side information comprises traffic light information and map information, and the traffic light information is information associated with the V2I event.

10. The method according to claim 9, wherein the second information comprises fifth motion information of the first terminal device obtained by the first device, and the fifth motion information is motion information for triggering the V2I event; and
the testing, by the network device, a V2I function of the first terminal device based on the first information and the second information comprises:
verifying, by the network device, the V2I event based on the fourth motion information, the fifth motion information, the first road side information, and second road side information, wherein the second road side information is road side information for triggering the V2I event.

11. The method according to claim 10, wherein the second information further comprises at least one of traffic flow information, the traffic light information, and the map information, and the method further comprises:
sending, by the network device, the first road side information to the first terminal device, wherein the first road side information comprises at least one of the information about the first road side event, the traffic light information, and the map information.

12. The method according to claim 10 or 11, wherein the verifying, by the network device, the V2I event based on the fourth motion information, the fifth motion information, the first road side information, and second road side information comprises:
determining, based on the fourth motion information, the fifth motion information, the first road side information, and the second road side information, whether the V2I event occurs; and
when it is determined that the V2I event occurs, verifying that the V2I event is true; or
when it is determined that the V2I event does not occur, verifying that the V2I event is false.

13. The method according to claim 11 or 12, wherein the method further comprises:
verifying authenticity of the fourth motion information and the first road side information based on the V2I event, sixth motion information, and third road side information, wherein
the sixth motion information is motion information that is from the first device and that is of a terminal device associated with the V2I event, and the third road side information is road side information that is from the first device and that is of the terminal device associated with the V2I event.

14. The method according to claim 13, wherein the verifying authenticity of the fourth motion information and the first road side information based on the V2I event, sixth motion information, and third road side information comprises:
when the fourth motion information is the same as the sixth motion information, determining that the fourth motion information is true; and
when the first road side information is the same as the third road side information, determining that the first road side information is true; or
when the fourth motion information is different from the sixth motion information, determining that the fourth motion information is false; and
when the first road side information is different from the third road side information, determining that the first road side information is false.

15. A vehicle test method, comprising:
sending, by a first terminal device, first information to a network device, wherein the first information comprises information about a vehicle-to-everything V2X event associated with the first terminal device; and
sending, by the first terminal device, information about the first terminal device to a first device, wherein the first device is a device different from the first terminal device, wherein
the first information and the information about the first terminal device are used to test a V2X function of the first terminal device.

16. The method according to claim 15, wherein the first information comprises information about a vehicle-to-vehicle V2V event associated with the first terminal device and/or information about a vehicle-to-infrastructure V2I event associated with the first terminal device.

17. The method according to claim 16, wherein when the first information comprises the information about the vehicle-to-vehicle V2V event associated with the first terminal device, the first information further comprises first motion information of a second terminal device; and
the first information and the information about the first terminal device are used to test a V2V function of the first terminal device.

18. The method according to claim 17, wherein the information about the first terminal device comprises second motion information of the first terminal device, and the second motion information is motion information for triggering the V2V event; and
the first motion information and the second motion information are used to test the V2V function of the first terminal device.

19. The method according to claim 16, wherein when the first information comprises the information about the vehicle-to-infrastructure V2I event associated with the first terminal device, the first information further comprises fourth motion information of the first terminal device and first road side information of a road on which the first terminal device is located; and
the first information and the information about the first terminal device are used to test a V2I function of the first terminal device.

20. The method according to claim 19, wherein the first road side information comprises information about a first road side event, and the first road side event is a road side event associated with the V2I event; or
the first road side information comprises traffic light information and map information, and the traffic light information is information associated with the V2I event.

21. The method according to claim 20, wherein the information about the first terminal device comprises fifth motion information of the first terminal device, and the fifth motion information is motion information for triggering the V2I event; and
the fourth motion information, the fifth motion information, the first road side information, and second road side information are used to test the V2I function of the first terminal device, and the second road side information is road side information for triggering the V2I event.

22. The method according to claim 21, wherein the method further comprises:
receiving, by the first terminal device, the first road side information sent by the network device, wherein the first road side information comprises at least one of the information about the first road side event, the traffic light information, and the map information.

23. A vehicle test apparatus, comprising:
a transceiver unit, configured to receive first information sent by a first terminal device, wherein the first information comprises information about a vehicle-to-everything V2X event associated with the first terminal device, wherein
the transceiver unit is further configured to receive second information sent by a first device, the first device is a device different from the first terminal device, and the second information comprises information about the first terminal device obtained by the first device; and
a processing unit, configured to test a V2X function of the first terminal device based on the first information and the second information.

24. A vehicle test apparatus, comprising:
a transceiver unit, configured to send first information to a network device, wherein the first information comprises information about a vehicle-to-everything V2X event associated with the vehicle test apparatus, wherein
the transceiver unit is further configured to send information about the vehicle test apparatus to a first device, wherein the first device is a device different from the vehicle test apparatus, and
the first information and the information about the vehicle test apparatus are used to test a V2X function of the vehicle test apparatus.

25. An electronic device, comprising a processor and a memory, wherein
the memory is configured to store computer-executable instructions; and
the processor is configured to execute the computer-executable instructions stored in the memory, so that the electronic device performs the method according to any one of claims 1 to 14 or claims 15 to 22.

26. A computer-readable storage medium, wherein
the computer-readable storage medium is configured to store instructions or a computer program, and when the instructions or the computer program are/is executed, the method according to any one of claims 1 to 14 or claims 15 to 22 is implemented.

27. A computer program product, comprising instructions or a computer program, wherein
when the instructions or the computer program are/is executed, the method according to any one of claims 1 to 14 or claims 15 to 22 is implemented.

28. A vehicle end, comprising the vehicle test apparatus according to claim 24.

29. A system, comprising a vehicle end and at least one of the vehicle test apparatus according to claim 23, the vehicle test apparatus according to claim 24, or the electronic device according to claim 25.

30. A system, comprising a network device and a first terminal device, wherein the network device is configured to perform the method according to any one of claims 1 to 14, and the first terminal device is configured to perform the method according to any one of claims 15 to 22.
